(19) Europäisches Patentamt
European Patent Office
Office européen des brevets

(11) EP 1 219 183 A2

(12) EUROPEAN PATENT APPLICATION

(43) Date of publication:
**03.07.2002 Bulletin 2002/27**

(51) Int Cl.[7]: **A23L 1/325**, A23L 1/48, A23B 4/16

(21) Application number: **01205078.7**

(22) Date of filing: **24.12.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.12.2000 IT MI002841**

(71) Applicant: **G.M. Ristorazione S.a.s. di 20122 Milan (IT)**

(72) Inventor: **Speroni, Carlo Enrico
21020 Taino (Varese) (IT)**

(74) Representative: **De Gregori, Antonella
Ing. Barzano & Zanardo Milano S.p.A.
Via Borgonuovo 10
20121 Milano (IT)**

# (54) Food product based on fish products and preparation procedure.

(57) The present invention relates to a food product based on fish products, comprising at least one fish product on a supporting dish comprising starches and/or vegetables, said food product being packaged in a modified atmosphere, ready for use.

Evolution of bacterial charge in sword fish-couscous mixture

Fig.1A

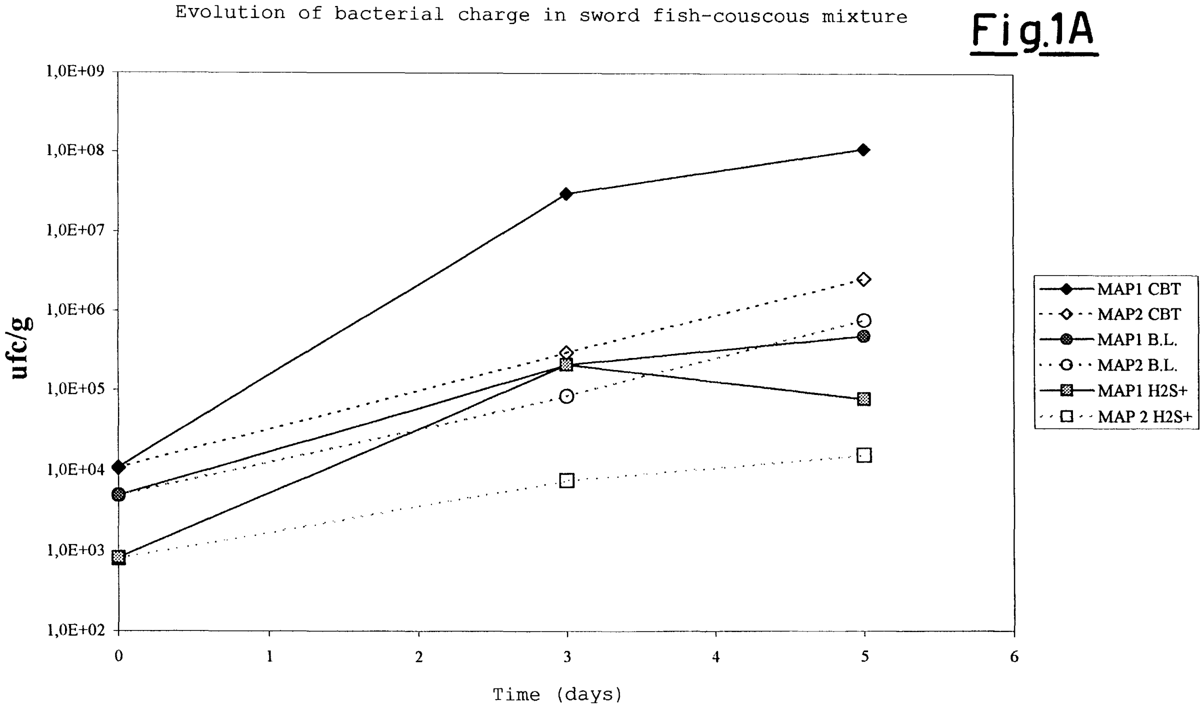


EP 1 219 183 A2

## Description

The present invention relates to a food product based on fish products and the relative preparation procedure.

Traditional "sushi", a typical Japanese dish based uniquely on raw fish products with a side-dish or supporting dish consisting of Japanese boiled rice and algae is characterized by typical flavours which are generally extremely different from the taste of Mediterranean countries.

Furthermore, due to the very nature of its components, it is a product which must be freshly prepared and is very difficult, if not almost impossible, to conserve. It is consequently a product which is difficult to insert in wide distribution, due to an extremely limited time duration.

Among all fresh food, in fact, fish products are definitely the most difficult to conserve owing to their highly perishable nature and their distribution creates very serious problems relating to the physical distances between the production area and markets. The rapidity with which fish products undergo alterations largely depends on the preservation temperature: the closer this is to 0°C, the longer the characteristics of the product will remain unaltered over a period of time. In this lies the importance of ensuring the cooling chain throughout the whole commercialization procedure of the product.

There are also other equally important variables which must be taken into consideration and which cause loss of freshness and therefore quality of fish products such as the species, type of contamination, preparation operations (evisceration, filleting...).

Even more difficult is obviously the preservation of an assembled product which, in addition to the fish product, also comprises other components.

This problem has been partially solved by proposing, for example, frozen foods which can be preserved for much longer periods with respect to fresh products, but which are neither fresh nor ready to eat.

On the basis therefore of a manifest request on the part of consumers for the availability of food products which do not require time expenditure for their preparation, with a reduced and balanced caloric content, which can also favour a slimming diet with a complete and balance nutritious contribution, attempts have been made to find a solution to the drawbacks described above.

In particular, it has been surprisingly found that the food product based on fish products, object of the present invention, solves the above disadvantages relating to the products of the known art.

Mediterranean sushi consequently has analogous chromatisms, aspects and presentations to those of an oriental dish, but it revolutionizes its substance, improving all its elements and transforming the product according to Japanese tradition into another different product.

An object of the present invention is therefore a food product based on fish products, characterized in that it comprises at least one fish product on a supporting dish including starches and/or vegetables, said food product being packaged in a modified atmosphere (or MAP), ready for use.

The term "ready for use" means a product which can be immediately eaten, as soon as the packaging is opened.

A further object of the present invention relates to a procedure for the preparation of a food product based on fish products characterized by the following steps:

a) optional cooking treatment of the fish product;
b) mixing the fish product treated with other possible ingredients;
c) cooking treatment of the supporting dish;
d) positioning of the product obtained under step b) onto the supporting dish treated in the previous step;
e) insertion of the end-product in a wrapping and packaging of the end-product in a modified atmosphere;
f) positioning of the packaged product in a structure which comprises at least one housing.

The supporting dish can consist of starches and/or vegetables.

The structure for the packaged product can also comprise at least two housings. Each housing may contain a food product according to the present invention having the same composition, packaged singly in a modified atmosphere, or each housing may contain food products according to the present invention having a different composition, packaged singly in a modified atmosphere.

The structure may also comprise other different housings, in addition to the housings for the food product according to the present invention.

Condiments packaged separately and/or the material necessary for use, such as paper napkins and disposable cutlery, packaged separately, can be inserted into the additional different housings included in the structure.

In particular, the food product based on fish products according to the present invention consists of at least one fish product on a supporting dish comprising starches and/or vegetables.

The food product based on fish products according to the present invention preferably comprises a packaging in a modified atmosphere consisting of a binary or tertiary mixture of gases selected from oxygen, nitrogen and carbon dioxide.

This atmosphere even more preferably consists of a mixture of gases containing nitrogen and carbon dioxide.

The modified atmosphere preferably has a concentration of $CO_2$ equal to or greater than 30%.

The modified atmosphere more preferably has a concentration of $CO_2$ equal to or greater than 40%.

In particular, the modified atmosphere consists of $CO_2$ (40%) and nitrogen (60%).

The food product based on fish products according to the present invention comprises at least one fish product prevalently selected from Mediterranean fish products, in particular prawns, tuna fish, angler fish, salmon, sword-fish, sardines, sea bass, gilthead bream, scorpion fish, "gallinella", clams, mackerel, anchovies, octopus, squid, cuttlefish, etc.

The food product based on fish products according to the present invention includes a supporting dish comprising starches which can be cereals, in particular wheat, rice and barley.

The starches preferably consist of durum wheat bran dough, such as, for example, spaghetti, rice shaped pasta, etc. or Italian-type rice such as, for example, Carnaroli rice.

The food product based on fish products according to the present invention includes a supporting dish which can comprise vegetables selected from greens, aubergines, salads, etc.

The food product based on fish products according to the present invention may also include the presence of simple or complex condiments, vegetables, preparations based on vegetables.

In particular, the simple condiments can be selected from oil, lemon and/or soya bean, oil and lemon emulsion, soy sauce in extra virgin olive oil, whereas the "complex" condiments can be selected from olive sauces, aubergine ratatouille, pesto with toasted pine kernels, etc.

Other ingredients can consist of salt, pepper, vinegar, basil, sugar, black olives, hot pepper, capers, pine kernels, fruit such as raisins and oranges, Parmesan cheese, breadcrumbs, parsley, garlic, etc.

The vegetables can be selected from lettuce leaves or of any other type of salad, tomatoes, carrots, vegetable marrows, leeks, greens, onions, celery, etc.

In particular, the food product based on fish products according to the present invention may comprise, inside the same structure in which it is positioned, when packaged in a modified atmosphere, the insertion of sachets containing the condiments, such as oil and lemon emulsion, soy sauce in extra virgin olive oil.

The food product based on fish products according to the present invention may optionally also contain, inside the same structure in which it is positioned, when packaged in a modified atmosphere, the necessary material for use, such as a paper napkin and disposable cutlery.

As well as being packaged in a modified atmosphere, the packaged product must be preserved until use at a temperature (T) lower than 4-5°C.

In particular, the procedure for the preparation of the fish product according to the present invention may comprise a cooking treatment of the fish product which can be selected from boiling, scalding, steaming, flash-frying with boiling oil and/or marinading.

The raw or cooked fish product can be mixed with other possible ingredients.

In particular, the procedure for the preparation of the fish product according to the present invention comprises a cooking treatment of the supporting dish which can consist of boiling.

The product obtained at the end of step b) is then joined to the supporting dish selected and treated as per step c).

The combined use of oil, lemon and soya bean, rather than soya bean alone, refines the taste of the product based on fish products according to the present invention, eliminating the negative aspects linked to the use of soya bean and introducing the limpid and simple flavours of Mediterranean tradition, such as the flavour of oil and lemon which blend well with starches, vegetables and fish.

The substitution of algae with vegetables and other typically Mediterranean condiments (such as tomatoes and olive sauce, aubergines ratatouille, or pesto with toasted pine kernels, lettuce leaves or others), complete the harmonious taste of the food product based on fish products according to the present invention.

Furthermore, the substitution of the typical Japanese rice "bases" with various types of starches, for example cereals such as barley, Italian rice, for example "Carnaroli" rice, and wheat, in particular any form of durum wheat bran dough, from spaghetti to rice shaped pasta, completes and refinishes the product defined as "Mediterranean sushi".

The recipes used for creating so-called Mediterranean sushi merit particular attention. These recipes, containing a few variants, are part of the regional tradition of Italian cooking, and in particular of the traditional cooking of coastal Italian regions.

The fragrance of the vegetables, combined with the most well-balanced and best-quality fish in the world, such as the fish of the Mediterranean Sea, make Mediterranean sushi a unique and special product, with an osmosis of flavours and calories difficult to find in other products and certainly not present in Japanese sushi.

Even salmon, which is not a Mediterranean fish, contributes to obtaining a product which satisfies these requisites.

The selection of preservation with the method of a modified atmosphere, allows the following advantages to be obtained: the creation of a product which is extremely close to the characteristics of a fresh product, a product which is ready for use, long-lasting conformation/structure of the product.

An advantage of the product according to the present invention is that it is a product which, with current means of distribution, can be put on the market with a "residual life" of about three days when the fish component is raw and at least seven days when the fish component has been subjected to cooking or other additional treatment.

A further advantage of the food product according to the present invention is consequently, in addition to a prolonged preservation, also a reduction in economic losses and easy distribution even at long distances, with the sale of a high-quality product.

As mentioned above, the selection of preservation in a modified atmosphere or MAP is fundamental for obtaining the food product according to the present invention.

The microbiological deterioration of the fish component is, in fact, the primary degradation event of the food product, object of the present invention.

The alteration is a rather rapid process which causes the degradation of the main organic constituents of the muscular tissue which form an excellent substrate for the growth of micro-organisms, thanks to the high water content, neutral pH and high concentration of non-proteinic nitrogenated products.

All degradative processes derive from the following phenomena:

- Enzymatic cellular autolysis
- Proteolysis and degradation of nitrogenated compounds
- Formation of trimethylamine
- Rancid development of the fats
- Microbial proliferation

Most micro-organisms require the presence of $O_2$ for their development. There are however other micro-organisms for which $O_2$ is toxic and which consequently do not develop in the presence of oxygen. The fundamental difference between these two groups of micro-organisms, called aerobic and anaerobic, mainly lies in the presence or absence of particular enzymes called superoxidodysmutase and catalase, enzymes present in aerobic micro-organisms and absent in anaerobic micro-organisms.

There are also other micro-organisms called optional aerobic-anaerobic micro-organisms, which can develop either in the presence or in the absence of $O_2$.

Finally a fourth group consisting of microaerophilic micro-organisms requires small amounts of $O_2$ for their development.

It is evident that, depending on the type of micro-organism which may develop in one or other of the food products and on the production cycle of the product itself (cooking, sterilization, etc...), the correct ratio between the gases forming the modified atmosphere must be identified. A greater or lesser presence of those gases which inhibit the development of the micro-organism itself will be selected.

There are several gases which can be used for modifying the composition of the atmosphere in contact with the food product, but among these those mainly used are $CO_2$, $N_2$ and $O_2$ which are also gases present in the atmosphere in which we live.

$CO_2$ is a gas with a marked bacteriostatic and bactericide effect and the inhibiting effect on micro-organisms is influenced by a large number of co-factors among which the following can be mentioned:

a) the partial pressure of the gas and its concentration;
b) the volume of the space surrounding the food inside the container;
c) the preservation temperature;
d) the acidity and $a_w$ of the product;
e) the initial microbial charge of the products and the development phase of the micro-organisms.

Among the co-factors mentioned, the one which mainly contributes to obtaining a well preserved product is the temperature. $CO_2$ exerts its maximum function at temperatures close to 0°C.

Nitrogen ($N_2$) has no particular importance from a microbiological point of view, but, as it is an antagonist of $O_2$, it delays the auto-oxidation of the fats which makes them rancid. Furthermore, as it is not soluble in water it remains free and prevents the container from deflating.

Oxygen, as already mentioned, is totally toxic for some micro-organisms, whereas it favours the development of others. It is therefore extremely difficult and at the same time fundamental to choose the correct value of $O_2$ to be left in the internal area of the packaging.

Preservation in a modified atmosphere therefore generally has both advantages and disadvantages with respect to preservation in a normal atmosphere. The advantages are a prolonged preservation life, a reduction in economic losses and easy distribution even at great distances, with the sale of high-quality products.

The disadvantages of this preservation technique are linked to an increase in the production costs, the necessity of rigidly controlling the preservation temperature, the necessity of formulating different gaseous mixtures depending on the food and the necessity of using particular techniques and machines.

This brief description of the microbiological problems relating to food preservation indicates the difficulty in identifying "a unique modified atmosphere" which can satisfy the preservation of a diversified product such as that according to the present invention.

It has been found that the use of a modified atmosphere (MAP), associated with low temperatures allows hygienic safety to be guaranteed and the organoleptic characteristics of the food product, according to the present invention, to be preserved.

This technology requires packaging materials with considerable barrier properties in order to avoid losing the components of the protective gaseous mixture, selected on the basis of the physico-chemical, nutritional and sensorial characteristics of the product.

In order to improve and prolong the shelf-life of extremely perishable products, complementary technologies have been tested to support refrigeration, with the aim of reducing the incidence of the most dangerous alterations such as oxidation phenomena, microbial multiplication and consequently microbial and enzymatic activities connected with the physiology of the micro-organisms involved.

Fish, in addition to having a limited shelf-life, also has problems relating to handling: it is slimy, wet and, if not cleaned correctly, can be foul-smelling.

Vacuum packaging and packaging in a modified atmosphere are currently the most widely used systems for prolonging the shelf-life of fresh, perishable products: both, however, are aimed at preventing and delaying alterations and not at correcting the faults. Furthermore, in consideration of all the additional problems associated with fish products mentioned above, the application of a modified atmosphere to raw fish products, above all combined with other components, was not held possible.

It has now, however, been surprisingly found that this application is possible using a certain modified atmosphere, with certain concentrations of $CO_2$ in the mixture of gases of said modified atmosphere, as the antimicrobial action of the gas is guaranteed by its capacity of dissolving at low preservation temperatures in the fish tissues (thus lowering the pH values).

The evaluation parameters of the quality of fish preserved in MAP taken into consideration are indicated below.

The evaluation of the shelf-life of fresh fish packaged in MAP was effected using a series of chemical, physico-chemical, microbiological and sensorial parameters, strictly linked to the fish species examined and under the experimental conditions adopted. The pH always decreases as a direct consequence of the dissolution of $CO_2$ in the tissues, also in relation to the temperature.

The deterioration of fresh fish is mainly due to microbial development. The deterioration of products which is such as to make them unacceptable is registered when the count of psychrotrophic bacteria exceeds $10^7$ ufc/g, although other Authors claim that a value of $10^6$ ufc/g is already critical and consider $10^7$ ufc/g as maximum. The micro-organisms present on fresh fish are mostly gram-negative psychrotrophic bacteria, and consequently $CO_2$ exerts a significant depressing effect on them which is directly proportional to its concentration and low preservation temperature. The inhibition of gram-negative bacteria is almost always accompanied by a stimulating effect on gram-positive bacteria which, at the end of the shelf-life, can become dominant and are mainly represented by lactic bacteria, responsible for the acid taste perceivable when the packaging of some fish species is opened.

In addition, a microbiological control is also important for verifying the sanitary hygienic state of the packaged product. Fish caught in non-polluted water only rarely contain pathogenic bacteria for human beings except for various types of Cl. botulinum and V. parahaemolyticus which are natural contaminants.

The possibility of developing Cl. botulinum has always aroused great interest, as it is known that the germination of its spores is stimulated by $CO_2$ pressures equal to or lower than 760 mm Hg.

It should be pointed out, however, that the germination of the spores and subsequent multiplication of the vegetative forms is mainly conditioned by the temperature and this variable has always been seriously taken into consideration as Cl.botulinum of the E type (that most typical of fish products) is capable of developing up to +3.3°C.

As it is essential, for safety purposes, to keep the temperature constant at approximately 0/+5°C, in the absence of an effective control, it may be indispensable to make use of other means (irradiation, immersion in sorbate, lactic acid, etc.) to be certain of preventing the development of the micro-organism and to exploit the extension of the product shelf-life which a modified atmosphere ensures.

The following tests were carried out on raw fish, as this is certainly the most difficult product to preserve. It can be immediately seen that if the fish product is previously subjected to cooking treatment, as optionally provided by the procedure according to the present invention, the results in terms of time duration of the product are better.

As already specified above, some embodiments of the food product based on fish products according to the present invention derive from traditional Japanese sushi, modifying some of the ingredients and production procedures.

As already described, traditional Japanese sushi consists of a part of simply boiled rice combined with fish products, (almost exclusively) raw.

The food product based on fish products according to the present invention maintains this combination and, in the following recipes, the term "support" indicates the part of the food product which accompanies the "fish products", whereas "condiments" refer to the sauces for the final dressing before being eaten.

| SUPPORT: rice and pesto | | | |
|---|---|---|---|
| Ingredients | Quantity | Treatment | Condiment/addition |
| Carnaroli rice | 1 Kg | Boiling 15' | |
| | | | Sugar 50 g |
| | | | Salt 25 g |
| | | | Vinegar 150 g |
| Pesto | | | Placed on top of the rice |
| Basil | To taste | Cleaning /cutting | |
| Pepper | To taste | Grinding | |
| Extra virgin oil | To taste | As such | |
| Pine kernels | To taste | Crushing | |
| Salt | To taste | As such | |

| SUPPORT: pearl barley | | | |
|---|---|---|---|
| Ingredients | Quantity | Treatment | Condiment/addition |
| Barley | 1 Kg | Boiled in vegetable broth (celery, onions, carrots) | |
| Carrots | To taste | Cleaning/dicing | Mixed with barley |
| Vegetable marrows | To taste | Cleaning/dicing | Mixed with barley |
| Leeks | | Cleaning/cutting | Mixed with barley |
| | | | All ingredients with extra virgin olive oil to taste, Parmesan cheese 50g, salt to taste., pepper to taste |

| SUPPORT: Rice-shaped pasta | | | |
|---|---|---|---|
| Ingredients | Quantity | Treatment | Condiment/addition |
| Rice-shaped pasta | 1 Kg | Boiled in vegetable broth (celery, onions, carrots) | Mixed with rice-shaped pasta |
| Tomato pulp | To taste | Cleaning/dicing | Mixed with rice-shaped pasta |
| Desalted capers | 30 g | Chopping | Mixed with rice-shaped pasta |
| Black olives | 50 g | Chopping | Mixed with rice-shaped pasta |
| Tomato concentrate | 3 spoonfuls | | Mixed with rice-shaped pasta |
| Hot pepper | To taste | Chopping | Mixed with rice-shaped pasta |

| SUPPORT: Rice and ratatouille | | | |
|---|---|---|---|
| Ingredients | Quantity | Treatment | Condiment/addition |
| Carnaroli rice | 1 Kg | Boiling 15' | |
| | | | Sugar 50 g |
| | | | Salt 25 g |
| | | | Vinegar 150 g |
| Vegetable marrows | 100 g | All ingredients cut and sautéd with extra virgin olive oil | All ingredients mixed with the rice |
| Onions | 20 g | | |
| Tomato pulp | 10 g | | |
| Olives | 2 | | |
| Celery | To taste | | |
| Black capers | To taste | | |
| Toasted pine kernels | To taste | | |
| Raisins | To taste | | |
| Basil | 5 leaves | | |
| Isinglass | 3 g | Diluted in water | Joined to the above |
| Sweet & sour sauce | 1 spoonful of sugar + ½ spoonful of white wine | | Joined to the above |

| SUPPORT: Rice with tomato preserve | | | |
|---|---|---|---|
| Ingredients | Quantity | Treatment | Condiment/addition |
| Carnaroli rice | 1 Kg | Boiling 15' | |
| | | | Sugar 50 g |
| | | | Salt 25 g |
| | | | Vinegar 150 g |
| Tomato preserve | | Tomato pulp baked at 40°C for 3 hrs, seasoned with extra virgin olive oil, garlic, chopped thyme, coarse salt, icing sugar. | A small piece of tomato for each support |

| SUPPORT: Greens for roulade of marinaded anchovies | | | |
|---|---|---|---|
| Ingredients | Quantity | Treatment | Condiment/addition |
| Leaves of greens | To taste | Boiling in salted water (10") and subsequent cooling in water and ice | Breadcrumbs, Parmesan cheese, chopped capers, chopped parsley, chopped garlic, toasted and crushed pine kernels, salt and pepper |

| FISH PRODUCTS | | |
|---|---|---|
| Type | Treatment | Condiment/Addition |
| Prawns | Dipped in boiling water | |

(continued)

| FISH PRODUCTS | | |
|---|---|---|
| Type | Treatment | Condiment/Addition |
| Tuna fish | Sautèd in a frying pan with extra virgin olive oil | |
| Angler fish | Steamed | |
| Salmon | Marinaded (for 1 kg of fish, 125 g of sugar + 105 g of salt for at least 48 hrs) | Pepper, herbs |
| Anchovies | Marinaded in vinegar, lemon, white wine | Pepper, salt |
| Sword-fish | Fresh | |

| CONDIMENTS | | | |
|---|---|---|---|
| Type | Ingredients | Quantity | Use |
| Lemon juice in sachets | Lemon | 250 ml | Ratatouille + prawns<br>Rice and pesto + angler fish<br>Rice + tomato preserve + sword-fish<br>Greens + anchovies |
| | Extra virgin olive oil | 750 ml | |
| Oil and soya bean in sachets | Soy sauce | 250 ml | Barley + salmon<br>Rice-shaped pasta + tuna fish |
| | Extra virgin olive oil | 750 ml | |

As mentioned above, it has been found that the most suitable modified atmosphere for conserving the food product according to the present invention is a modified atmosphere which comprises a $CO_2$ content equal to or higher than 40%.

Experimental tests were, in fact, effected and the corresponding physico-chemical, microbiological and sensorial results are provided below.

In particular, the experimental tests were carried out in two phases:

in PHASE I, the most effective protective mixture for extending the shelf-life of Mediterranean sushi, was identified. Two atmospheres were selected: one rich in oxygen (80% $O_2$) and one rich in carbon dioxide (40% $CO_2$);

in PHASE II, the repeatability of the relative packaging results of Mediterranean sushi in the atmospheres adopted in phase I was verified together with the efficiency of the procedure according to the present invention also in the case of traditional Japanese sushi, currently packaged in an atmosphere consisting of air. In this case, only the mixture rich in carbon dioxide which had given the best results during phase I of the experimental tests relating to Mediterranean sushi, was tested.

During the first work phase, the following samples of Mediterranean sushi and the single components (the seasoned starch base and fillet of raw fish), were analyzed:

- salmon on barley with vegetables
- scorpion fish on rice with pesto with a sprinkling of pine kernels
- tuna fish on rice-shaped pasta with tomatoes and a mint leaf
- cuttlefish on rice with sepia
- prawns on rice with saffron
- sword-fish on couscous with pine kernels and raisins

Subsequently (phase II), samples of traditional Japanese sushi prepared using the same fish species but all housed with a base of steamed white rice covered with wasabi (sauce based on radish and mustard), were also subjected to microbiological, physico-chemical and sensorial analyses.

The single components (starch base and fish) of the sushi and parallelly the whole product were housed in polypropylene (PP) truncated cone-shaped containers having a capacity of 175 ml, internally coated with a high barrier performance lining.

In the first packaging phase, a modified atmosphere was created with the following mixtures:
MAP1 = 80% of $O_2$ and 20% of $N_2$

MAP2 = 40% of $CO_2$ and 60% of $N_2$

The packagings were closed with an SiOx barrier film in the laboratory with a vacuum compensation TECNOVAC packager, marked with identification codes and kept in cold stores under the following temperature conditions:

$$T_1 = 5 \pm 0.5°C$$

The temperature selection was effected so as to reproduce the conditions of the wide distribution cold stores and household refrigerators where the product would be stored.

Both microbiological and physico-chemical analyses were made on the products packaged under the two different conditions.

All the analyses were effected at time zero (arrival of the product in the laboratory) and at subsequent time intervals established for preservation, up to the evaluation of the maximum commercial shelf-life period.

MICROBIOLOGICAL ANALYSIS

Analysis on samples was carried out at various preservation steps t = 0 (sample just prepared and assembled) :

fish analysis: Total bacterial charge (CBT), $H_2S$, fecal *and E.coli* coliforms, Lactic Bacteria, *Staphylococcus aureus, B. Cereus,* Clostridia sulfite reducers;

analysis on the starch base: CBT, fecal *and E.coli* coliforms, yeast and mould, Lactic Bacteria, *Staph. aureus, B. Cereus,* Clostridia sulfite reducers;

analysis on the mixture: CBT, $H_2S$, yeast and mould, Lactic Bacteria, pathogen micro-organisms: *Salmonella spp, Listeria monocytogenes, E.coli 0:157;* t = 3 after three days of preservation in a cold store at 5°C.

Analysis were effected on samples preserved in the presence of the two atmospheres:

fish analysis: CBT, $H_2S$+, B.L.

analysis on the starch base: CBT, B.L.

analysis on the mixture: CBT, $H_2S$+, B.L. t = 5 after five days of preservation in a cold store at 5°C.

fish analysis: CBT, $H_2S$+, Lactic Bacteria, *Staph. aureus, B. Cereus,* fecal and *E.coli* coliforms, Clostridia sulfite reducers;

analysis on the starch base: CBT, yeast and mould, Lactic Bacteria, *Staph. aureus, B. Cereus,* fecal and *E.coli* coliforms, Clostridia sulfite reducers;

analysis on the mixture: CBT, $H_2S$+, yeast and mould, Lactic Bacteria, *Staph. aureus, B. Cereus,* fecal and *E. coli* coliforms, Clostridia sulfite reducers; pathogenic micro-organisms: *Salmonella spp, Listeria monocytogenes, E. coli 0:157.*

In phase II the analyses were repeated on the following samples:

- salmon on barley with vegetables;
- scorpion fish on rice with pesto;
- tuna fish on rice-shaped pasta with tomatoes;
- prawns on rice with saffron.

Of these, only the whole assembled product was analyzed to detect the Total Bacterial Charge, Lactic Bacteria, $H_2S$, yeast and mould in the following preservation steps: t = 0, t = 1, t = 2, t = 3, t = 3.5 and t = 6.

Parallelly the analysis was carried out on traditional Japanese sushi prepared with the same fish species but housed on steamed rice and wasabi.

The following were examined on these samples: Total Bacterial Charge, lactic bacteria, $H_2S$, yeast and mould. At time zero fecal and *E.coli* coliforms, *Bacillus cereus,* Clostridia sulfite reducers and pathogenic micro-organisms *E.coli 0:157, salmonella.*

CHEMICAL AND INSTRUMENTAL ANALYSES

The physico-chemical analysis were aimed at

- monitoring the evolution of the internal protective atmosphere by means of gas-chromatographic controls;
- determining the variation in the surface pH of the preserved products.

*Determination of the surface pH*

The pH measurement was effected on all the components of Mediterranean sushi (starch base, fish species and various condiments), variously packaged, preserved in a cold store at 5°C for 1, 3 and 5 days.
A GLP21-22 thermo-pH meter of Crison Instrument SA was used, with automatic temperature compensation, equipped with combined surface electrode centesimal resolution. The instrument was regularly calibrated with buffer solutions at pH 4 and pH 7. The measurements were carried out at room temperature at a value of 26°C. The values presented are the average readings.

*Gas-chromatographic analysis of* the atmosphere

The atmosphere inside the packagings, filled with the gaseous mixture MAP1 (80% $O_2$ - 20% $N_2$) and MAP2 (40% $CO_2$ - 60% $N_2$) was analyzed by gaschromatography, using the instrument 5890 series II of Hewlett-Packard with a thermo-conductivity detector and equipped with a CTRI (Alltech Italia, srl) steel packed column (2 m x 6 mm).
50 µl of atmosphere were removed from the packagings, taken directly from the cold store at 5°C, with a gas-tight syringe of the series Hamilton GASITIGHT, through a silicon septum fixed on the material. The analysis conditions are illustrated in the table. The values indicated represent the relative volume percentages of the gaseous components.
The percentage variation of the components of the gaseous mixture has been specified in a graph against the time, thus showing its trend during the preservation period.

| GC 5890 | |
|---|---|
| Temperature of the injector | 120°C |
| Temperature of the column | 50°C |
| Temperature of the detector | 125°C |
| Carrier gas (stream) | Helium (30ml/min) |
| Quantity injected | 50µL |

Instrumental conditions of the gas-chromatograph

The results obtained in phase I demonstrate how the microbial development in the starch base is insignificant with respect to that observed in the fish portion which is considerably detrimental to the preservation of the whole product both in MAP1 and MAP2.
MAP2 proved to have a more effective inhibiting action due to the presence of carbon dioxide in the composition of the protective mixture, as the microbial charges at the end of the preservation were always lower than those observed in MAP1. In Mediterranean sushi based on salmon and scorpion fish conditioned in MAP2 for example, the total bacterial charge (CBT) remained unvaried for up to 3 days.
In phase II, controls were effected every 24 hours for up to 6 days of preservation to identify the rate at which the micro-organisms multiply and to observe their development trend. This enabled the evolution and total bacterial charge to be followed, which proved to be more moderate in the samples conserved in MAP2, demonstrating also in this latter test their more effective inhibiting action.
A comparison with the subsequent packaging of traditional Japanese sushi in air and in MAP2 further demonstrated the effectiveness of the protective atmosphere rich in carbon dioxide in prolonging the shelf-life of the product with raw fish component to up to 3 days in barrier containers.
The product closed in air, however, showed total bacterial charge values higher than $10^5$ already after 3 days.
The pH measurements effected on the various product components showed how, with the passing of time, the slime flux produced by the fish tissue penetrates the underlying starch base, causing a rise in the pH values in the layer in contact with the fish, leveling the value of the readings.
Consequently the physico-chemical analyses also revealed how the deterioration of the fish component decisively influences the complete deterioration of the whole product.
The graphs and tables relating to the microbiological analyses carried out on each of the products tested both in phase I and phase II, are provided:

- sword-fish on couscous with pine kernels and raisins (Figures 1A-4A, Tab. 1A-3A);
- salmon on barley with vegetables (Figures 1B-4B, Tab. 1B-3B) ;
- scorpion fish on rice with pesto with a sprinkling of pine kernels (Figures 1C-4C, Tab. 1C-3C);

- tuna fish on rice-shaped pasta with tomatoes and a mint leaf (Figures 1D-4D, Tab. 1D-3D);
- cuttlefish on rice with sepia (Figures 1E-4E, Tab. 1E-3E);
- prawns on rice with saffron (Figures 1F-4F, Tab. 1F-3F);

In particular, Figures 1A-F represent the graphs relating to the trend of the microbial charges in the six assembled products indicated above in MAP1 and MAP2.
Figures 2A-F represent the graphs relating to the trend of the microbial charges in the fish component of the six assembled products indicated above in MAP1 and MAP2.
Figures 3A-F represent the graphs relating to the trend of the microbial charges in the classical Japanese sushi with the fish component of the six products indicated above in air.
Figures 4A-F represent the graphs relating to the trend of the microbial charges in the classical Japanese sushi with the fish component of the six products indicated above in MAP2.
The inhibiting capacity of the modified atmosphere with respect to microbial development was also guaranteed by the selection and use of packaging materials having high barrier properties, which maintained the composition of the protective mixture.
Other modified atmospheres were then tested.

Example 1

| | | |
|---|---|---|
| $O_2$ 5% | $CO_2$ 40% | $N_2$ 55% |

Signs of a diminishing of the consistency on the part of the fish products are observed, the supports maintain a palatable appearance, indistinct and uniform smell.
Not marketable.

Example 2 (MAP2)

| | |
|---|---|
| $CO_2$ 30% | $N_2$ 70% |

Visibly acceptable, indistinct and uniform smell, excellent consistency of the fish products, excellent consistency of the supporting dishes, flavour very close to the fresh product.

Example 3

| | |
|---|---|
| $CO_2$ 30% | $N_2$ 70% |

Visibly acceptable, indistinct and uniform smell, excellent consistency of the fish products, excellent consistency of the supporting dishes, flavour very close to the fresh product.

Example 4

| | | |
|---|---|---|
| $O_2$ 10% | $CO_2$ 40% | $N_2$ 50% |

Visibly acceptable, indistinct and uniform smell, excellent consistency of the fish products, excellent consistency of the supporting dishes, flavour sufficient.
The results of the microbiological tests effected on Mediterranean sushi and on Japanese sushi lead to the conclusions that, regardless of the type of formulation used, the main degradation of sushi is due to the microbiological deterioration of the fish component. The quality and type of fish species are therefore fundamental for preservation;

prawns and cuttlefish have proved to be the most problematical.

The bacterial charge at time zero of the fish product is essential for determining the safety time range of the whole product and consequently the maximum preservation limit ($t_m$). It is therefore extremely important to also provide for a severe control of the in-coming raw materials and a preparation procedure of the product in order to standardize the parameters relating to all the phases and operating conditions of sushi in adequately conditioned environments.

From a microbiological point of view, products based on raw fish can be considered as being acceptable for up to 3 days. After this period the products are, in fact, unsuitable for use, due to both the microbial charges (almost always higher than $10^5$ ufc/g), and to the appearance and unpalatable organoleptic characteristics.

To conclude, the best results are obtained with the use of atmospheres with a high concentration of $CO_2$ in order to substantially'control the microbial development and mitigate the oxidation effects of the product.

It has therefore been surprisingly found that a modified atmosphere is appropriate for prolonging the preservation of a fish product, provided the $CO_2$ percentage is sufficiently high, i.e. equal to or higher than 30%.

The modifications observed after the maximum preservation time indicated are evidently linked to the modifications of the tissues (mainly the denaturation of the proteins) and consequently to the degradative activities which characterize the deterioration of fresh fish, causing the absolute unacceptability of the whole product from an organoleptic point of view.

Synergetic treatment and techniques have also been identified for improving the results obtained with MAP packaging; for example irradiation, associated with a MAP packaging with 60% of $CO_2$, has allowed the shelf-life of cod fillets to be prolonged to up to 24 days.

Among the techniques tested together with MAP, the one most frequently adopted is the immersion of the product in solutions of K sorbate, lactic acid, polyphosphates, sodium chloride, also variably mixed with each other.

Sensorial Tests

Sensorial tests were also effected to verify the approval of the product on the part of the consumer: a sample was tested of 100 consumers who were asked to assign an overall acceptability score from 0 (extremely unpleasant) to 100 (extremely pleasant).

16 different formulations of sushi were tested to reveal the existence of possible significant differences between the fresh product and preserved product and between traditional and Mediterranean formulations, fresh product referring to products eaten within two hours of preparation and preserved product, products preserved in a modified atmosphere (40% $CO_2$ and 60% $N_2$) and preserved at 4°C for 2 days.

The traditional formulations tested are based on fresh tuna fish ($TO_{tf}$) and preserved tuna fish ($TO_{tc}$), fresh scorpion fish ($SC_{tf}$) and preserved scorpion fish ($SC_{tc}$), fresh salmon ($SA_{tf}$) and preserved salmon ($SA_{tc}$), fresh cuttlefish ($SE_{tf}$) and preserved cuttlefish ($SE_{tc}$), all on a support of boiled rice with wasabi sauce.

The Mediterranean formulations tested are based on fresh tuna fish ($TO_{mf}$) and preserved tuna fish ($TO_{mc}$) on a support of rice-shaped pasta with tomatoes, capers, olives and hot pepper, fresh scorpion fish ($SC_{mf}$) and preserved scorpion fish ($SC_{mc}$) on a support of rice with pesto, fresh salmon ($SA_{mf}$) and preserved salmon ($SA_{mc}$) on a support of pearl barley with carrots, vegetable marrows and leeks and fresh cuttlefish ($SE_{mf}$) and preserved cuttlefish ($SE_{mc}$) on a support of rice with sepia.

The following results were obtained:

| Samples | Average score | Sample | Average score |
|---|---|---|---|
| $TO_{tf}$ | 50.73 | $TO_{tc}$ | 50.42 |
| $SC_{tf}$ | 40.98 | $SC_{tc}$ | 59.09 |
| $SA_{tf}$ | 47.77 | $SA_{tc}$ | 57.98 |
| $SE_{tf}$ | 37.02 | $SE_{tc}$ | 48.37 |
| $TO_{mf}$ | 51.95 | $TO_{mc}$ | 40.65 |
| $SC_{mf}$ | 63.89 | $SC_{mc}$ | 60.31 |
| $SA_{mf}$ | 63.93 | $SA_{mc}$ | 60.37 |
| $SE_{mf}$ | 52.10 | $SE_{mc}$ | 49.80 |

It is interesting to note that there are no significant differences in favour of the fresh product with respect to the product preserved in a modified atmosphere. In three cases out of seven the preserved product has even proved to be more pleasant than the fresh product.

From what is specified above, it is therefore evident that the type of packaging used for the food product based on fish products of the present invention is also important.

An essential characteristic of the packaging is for it to be impermeable to the gas mixture selected for the best preservation of the product, to ensure that the modified atmosphere inserted at the time of packaging the food product according to the invention, remains completely unaltered until it is eaten. This involves the use of materials with specific technical characteristics suitable for coming into contact with food products, which satisfy the regulation in force with respect to the packaging of products destined for human consumption.

This involves the use of a separate wrapping for each type of Mediterranean sushi to prevent creating a mixture of odours which would jeopardize the specificity of the flavour.

In accordance with this kind of solution, each type of Mediterranean sushi is consequently contained in its own wrapping, packaged in a modified atmosphere, and housed in a structure which comprises at least one housing for the food product according to the present invention and which can also include other different housings.

The material forming the wrapping in which the food product according to the present invention can be packaged in a modified atmosphere, can be, for example, a vinylidene chloride copolymer (PVDC), whereas the material for closing the wrapped container can be a PVDC film.

Table 1A

Couscous with pine kernels and raisins + sword-fish in MAP1

| MAP 1 | Time 0 | | | 3 days | | | 5 days | | |
|---|---|---|---|---|---|---|---|---|---|
| | sword-fish | Cous cous | Mix | sword-fish | Cous cous | Mix | sword-fish | Cous cous | Mix |
| CBT | $4*10^4$ | $4*10^3$ | $1.12*10^4$ | $5*10^7$ | $2*10^4$ | $3*10^7$ | $3.1*10^7$ | $1.3*10^6$ | $1.1*10^8$ |
| $H_2S$+ | $2.3*10^3$ | nd | $8.4*10^2$ | $2.2*10^6$ | nd | $2.1*10^5$ | $7.8*10^5$ | nd | $8*10^4$ |
| fecal Colif. | 2.5 | 2.5 | nd | nd | nd | nd | 2.5 | Ass 1g | Ass 1g |
| *E. coli* | Ass 1g | Ass 1g | nd | nd | nd | nd | Ass 1g | Ass 1g | Ass 1g |
| Yeast | Nd | 100 | 200 | nd | nd | nd | nd | $1*10^3$ | $5*10^3$ |
| Mould | Nd | <100 | <100 | nd | nd | nd | nd | $6*10^3$ | <100 |
| Total Lactic | $5.6*10^4$ | $2.2*10^2$ | $5*10^3$ | $4*10^5$ | $1.1*10^3$ | $2.1*10^5$ | $4*10^4$ | $7*10^3$ | $4.9*10^5$ |
| *St. aureus* | $1.4*10^3$ | <100 | nd | nd | nd | nd | 100 | <100 | 400 |
| *B. cereus* | <100 | <100 | nd | nd | nd | nd | nd | nd | nd |
| Cl. $H_2S$+ | 2.5 | Ass 1g | nd | nd | nd | nd | Ass 1g | nd | Ass 1g |
| *Salmonella* | Nd | nd | Ass 25g | nd | nd | nd | nd | nd | nd |
| *Listeria* | Nd | nd | Ass 25g | nd | nd | nd | nd | nd | nd |
| *E. coli* O:H157 | Nd | nd | | nd | nd | nd | nd | nd | nd |

Table 2A

Couscous with pine kernels and raisins + sword-fish in MAP2

| **MAP 2** | Time 0 | | | 3 days | | | 5 days | | |
|---|---|---|---|---|---|---|---|---|---|
| | sword-fish | Cous cous | Mix | sword-fish | Cous cous | Mix | sword-fish | Cous cous | Mix |
| CBT | $4*10^4$ | $4*10^3$ | $1.12*10^4$ | $3.1*10^6$ | $8*10^4$ | $3*10^5$ | $2*10^6$ | $2*10^3$ | $2.6*10^6$ |
| $H_2S$+ | $2.3*10^3$ | nd | $8.4*10^2$ | $3*10^4$ | nd | $7.7*10^3$ | $4*10^4$ | nd | $1.6*10^4$ |
| fecal Colif. | 2.5 | 2.5 | nd | nd | nd | nd | 0.4 | 2.5 | 2.5 |
| *E. coli* | Ass 1g | Ass 1g | nd | nd | nd | nd | Ass 1g | Ass 1g | Ass 1g |
| Yeast | Nd | 100 | 200 | nd | nd | nd | nd | 500 | $1.3*10^3$ |
| Mould | Nd | <100 | <100 | nd | nd | nd | nd | <100 | <100 |
| total Lactic | $5.6*10^4$ | $2.2*10^2$ | $5*10^3$ | $1.87*10^5$ | $1*10^3$ | $8.5*10^4$ | $2.6*10^5$ | $7*10^4$ | $7.7*10^5$ |
| *St. aureus* | $1.4*10^3$ | <100 | nd | nd | nd | nd | 400 | 300 | 100 |
| *B. cereus* | <100 | <100 | nd | nd | nd | nd | nd | nd | nd |
| Cl. $H_2S$+ | 2.5 | Ass 1g | nd | nd | nd | nd | Ass 1g | nd | Ass 1g |
| *Salmonella* | Nd | nd | Ass 25g | nd | nd | nd | nd | nd | |
| *Listeria* | Nd | nd | Ass 25g | nd | nd | nd | nd | nd | nd |
| *E. coli* O:H157 | Nd | nd | | nd | nd | nd | nd | nd | |

Table 3A

Classical Japanese Sushi with sword-fish: air/MAP2 comparison

| | | AIR | | | | | MAP2 | | | | |
|---|---|---|---|---|---|---|---|---|---|---|---|
| | 0 | 1 | 2 | 3 | 3.5 | 6 | 1 | 2 | 3 | 3.5 | 6 |
| CBT | $1x10^4$ | $1x10^4$ | $8x10^6$ | $3.4x10^5$ | $5x10^5$ | $1.1x10^8$ | $4.5x10^4$ | $1.8x10^4$ | $3x10^4$ | $6x10^4$ | $2x10^5$ |
| $H_2S+$ | 10 | $2.4x10^2$ | $2.4x10^2$ | $9x10^2$ | $5x10^2$ | $3.8x10^4$ | $2.6x10^3$ | <100 | <10 | <10 | <100 |
| Yeast | $7x10^3$ | $6x10^3$ | $1.5x10^4$ | $1.2x10^4$ | $6x10^3$ | $1.1x10^4$ | $2.7x10^4$ | $1.1x10^4$ | $1.2x10^4$ | $7x10^3$ | $5x10^3$ |
| Mould | <100 | <100 | $7x10^3$ | <100 | <100 | <100 | <100 | <100 | <100 | <100 | <100 |
| Lactic | $6x10^2$ | $3.2x10^2$ | $1.2x10^4$ | $1.2x10^4$ | $3x10^4$ | $6.4x10^5$ | $9x10^2$ | $1.2x10^3$ | $1x10^4$ | $4x10^3$ | $3x10^4$ |
| *Stap.aureus* | $9x10^2$ | | | | | | | | | | |
| Coliforms | **Ass 1g** | | | | | | | | | | |
| E.coli | Ass 10g | | | | | | | | | | |
| Salmonella | Ass 25g | | | | | | | | | | |

Table 1B

Barley with vegetables + salmon in MAP1

| **MAP 1** | Time 0 | | | 3 days | | | 5 days | | |
|---|---|---|---|---|---|---|---|---|---|
| | Fish | Barley + Veget. | Mix | Fish | Barley + Veget. | Mix | Fish | Barley + Veget. | Mix |
| CBT | $8*10^4$ | $5*10^3$ | $8*10^4$ | $8.2*10^5$ | $3*10^3$ | $4.4*10^5$ | $1.4*10^9$ | $8*10^5$ | $7.3*10^7$ |
| $H_2S$+ | <10 | Nd | <10 | $6.6*10^2$ | nd | $6.6*10^2$ | $1*10^4$ | nd | $1*10^4$ |
| fecal Colif. | 2.5 | 25 | nd | nd | nd | nd | Ass 1g | Ass 1g | Ass 1g |
| *E. coli* | Ass 1g | Ass 1g | nd | nd | nd | nd | Ass 1g | Ass 1g | Ass 1g |
| total Eumycetes | Nd | $6*10^2$ | nd | nd | nd | nd | nd | $1.2*10^4$ | $1.2*10^4$ |
| total Lactic | $2.7*10^4$ | Nd | nd | 30 | 350 | 830 | $1.8*10^6$ | $4.7*10^4$ | $5.2*10^6$ |
| *Leuconostoc* spp. | Nd | Nd | nd | nd | nd | nd | nd | nd | nd |
| *St. aureus* | <100 | <100 | nd | nd | nd | nd | nd | nd | nd |
| *B. cereus* | Z100 | <100 | nd | nd | nd | nd | nd | <100 | <100 |
| Cl. $H_2S$+ | Ass 1g | Ass 1g | nd | nd | nd | nd | nd | Ass 1g | Ass 1g |
| *Salmonella* | Nd | Nd | Ass 25g | nd | nd | nd | nd | nd | |
| *Listeria* | Nd | Nd | Ass 25g | nd | nd | nd | nd | nd | Ass 25g |
| *E. coli* O:H157 | Nd | Nd | Ass 10g | nd | nd | nd | nd | nd | Ass 25g |

Table 2B
Barley with vegetables + salmon in MAP2

| MAP 2 | Time 0 | | | 3 days | | | 5 days | | |
|---|---|---|---|---|---|---|---|---|---|
| | Fish | Barley + Veget. | Mix | Fish | Barley + Veget. | Mix. | fish | Barley + Veget. | Mix |
| CBT | $8*10^4$ | $5*10^3$ | $8*10^4$ | $4*10^4$ | $4*10^3$ | $3*10^4$ | $5.3*10^7$ | $2.4*10^6$ | $2*10^6$ |
| $H_2S+$ | <10 | Nd | <10 | $2*10^3$ | nd | $2*10^3$ | $1*10^4$ | nd | $1*10^4$ |
| Fecal Colif. | 2.5 | 25 | nd | nd | nd | nd | Ass 1g | Ass 1g | Ass 1g |
| *E. coli* | Ass 1g | Ass 1g | nd | nd | nd | nd | Ass 1g | Ass 1g | Ass 1g |
| total Eumycetes | nd | $6*10^2$ | nd | nd | nd | nd | nd | $3*10^2$ | $7*10^3$ |
| total Lactic | $2.7*10^4$ | nd | nd | $5*10^3$ | 310 | 440 | $7.5*10^6$ | $8*10^5$ | $1.4*10^6$ |
| *Leuconostoc* spp. | nd | nd | nd | nd | nd | nd | nd | nd | nd |
| *St. aureus* | <100 | <100 | nd | nd | nd | nd | nd | nd | nd |
| *B. cereus* | Z100 | <100 | nd | nd | nd | nd | nd | <100 | <100 |
| Cl. $H_2S+$ | Ass 1g | Ass 1g | nd | nd | nd | nd | nd | Ass 1g | Ass 1g |
| *Salmonella* | nd | nd | Ass 25g | nd | nd | nd | nd | nd | |
| *Listeria* | nd | nd | Ass 25g | nd | nd | nd | nd | nd | Ass 25g |
| *E. coli* O:H157 | nd | nd | Ass 10g | nd | nd | nd | nd | nd | Ass 25g |

Table 3B

Classical Japanese Sushi with salmon: air/MAP2 comparison

| | | AIR | | | | MAP2 | | | |
|---|---|---|---|---|---|---|---|---|---|
| | 0 | 1 | 2 | 3 | 6 | 1 | 2 | 3 | 6 |
| CBT | $2x10^3$ | $5.9x10^4$ | $2.3x10^4$ | $2.6x10^5$ | $9.6x10^4$ | $5x10^3$ | $1.2x10^4$ | $9.2x10^3$ | $1.5x10^5$ |
| H2S+ | 300 | $1.1x10^3$ | $3.4x10^3$ | $5.2x10^4$ | <100 | 280 | $1.3x10^3$ | $1x10^3$ | 200 |
| Yeast | $1.8x10^3$ | $5x10^3$ | $2x10^3$ | $2.8x10^3$ | 600 | 400 | $2x10^3$ | 600 | $1.6x10^3$ |
| Mould | <100 | <100 | <100 | <100 | <100 | <100 | <100 | <100 | <100 |
| Lactic | 150 | 260 | $2x10^3$ | $4x10^4$ | $8x10^3$ | 290 | $1.8x10^3$ | $1.3x10^3$ | $1.4x10^5$ |

Table 1C

Rice with pesto + scorpion fish, with a sprinkling of pine kernels in the mix, in MAP1

| | Time 0 | | | 3 days | | | 5 days | | |
|---|---|---|---|---|---|---|---|---|---|
| **MAP 1** | Fish | Rice | Mix | Fish | Rice | Mix | Fish | Rice | Mix |
| CBT | $2.8*10^4$ | $5.24*10^3$ | $1.6*10^4$ | $1*10^7$ | $3.6*10^3$ | $2*10^7$ | $10^9$ | $2.3*10^6$ | $2.5*10^8$ |
| $H_2S$+ | $1*10^3$ | nd | $1*10^3$ | $5.9*10^4$ | Nd | $5.9*10^4$ | $1.4*10^7$ | nd | $5.5*10^7$ |
| Fecal Colif. | 110 | 45 | nd | nd | Nd | nd | 0.3 | 2.5 | 45 |
| *E. coli* | Ass 1g | Ass 1g | nd | nd | Nd | nd | Ass 1g | Ass 1g | Ass 1g |
| Yeast | nd | $4*10^2$ | $4*10^3$ | nd | Nd | nd | nd | $4.4*10^4$ | $5*10^3$ |
| Mould | nd | $2*10^2$ | <100 | nd | Nd | nd | nd | $2*10^2$ | <100 |
| total Lactic | $4.2*10^2$ | $1.11*10^3$ | $5.6*10^5$ | $2.9*10^4$ | 30 | $2.7*10^4$ | $1*10^7$ | 290 | $1.7*10^7$ |
| *Leuconostoc* spp. | <100 | <100 | nd | nd | Nd | nd | <100 | <100 | <100 |
| *St. aureus* | <100 | 400 | nd | nd | Nd | nd | nd | nd | nd |
| *B. cereus* | <100 | <100 | nd | nd | Nd | nd | nd | <100 | <100 |
| Cl. $H_2S$+ | 0.4 | Ass 1g | nd | nd | Nd | nd | nd | nd | Ass 1g |
| *Salmonella* | nd | nd | Ass 25g | nd | Nd | nd | nd | nd | |
| *Listeria* | nd | nd | Ass 25g | nd | Nd | nd | nd | nd | Ass 25g |
| *E. coli* O:H157 | nd | nd | Ass 10g | nd | nd | nd | nd | nd | |

Table 2C

Rice with pesto + scorpion fish, with a sprinkling of pine kernels in the mix, in MAP2

| | Time 0 | | | 3 days | | | 5 days | | |
|---|---|---|---|---|---|---|---|---|---|
| **MAP 2** | Fish | Rice | Mix | Fish | Rice | Mix. | Fish | Rice | Mix. |
| CBT | $2.8*10^4$ | $5.24*10^3$ | $1.6*10^4$ | $2.7*10^5$ | $5*10^3$ | $3*10^4$ | $3*10^6$ | $1.2*10^4$ | $1*10^7$ |
| $H_2S$+ | $1*10^3$ | nd | $1*10^3$ | <100 | nd | <100 | $5*10^5$ | nd | $6.1*10^5$ |
| Fecal Colif. | 110 | 45 | nd | nd | nd | nd | 110 | 0.4 | 110 |
| *E. coli* | Ass 1g | Ass 1g | nd | nd | nd | nd | Ass 1g | Ass 1g | Ass 1g |
| Yeast | nd | $4*10^2$ | $4*10^3$ | nd | nd | nd | nd | 600 | $4*10^3$ |
| Mould | nd | $2*10^2$ | <100 | nd | nd | nd | nd | <100 | <100 |
| total Lactic | $4.2*10^2$ | $1.11*10^3$ | $5.6*10^5$ | $3*10^3$ | 20 | $3*10^3$ | $1.2*10^6$ | $2*10^3$ | $2,5*10^5$ |
| *Leuconostoc* spp. | <100 | <100 | nd | nd | nd | nd | <100 | <100 | <100 |
| *St. aureus* | <100 | 400 | nd | nd | nd | nd | nd | nd | nd |
| *B. cereus* | <100 | <100 | nd | nd | nd | nd | nd | <100 | <100 |
| Cl. $H_2S$+ | 0.4 | Ass 1g | nd | nd | nd | nd | nd | nd | Ass 1g |
| *Salmonella* | nd | nd | Ass 25g | nd | nd | nd | nd | nd | |
| *Listeria* | nd | nd | Ass 25g | nd | nd | nd | nd | nd | Ass 25g |
| *E. coli* O:H157 | nd | nd | Ass 10g | nd | nd | nd | nd | nd | |

Table 3C

Classical Japanese Sushi with scorpion fish: air/MAP2 comparison

| | | AIR | | | | | MAP2 | | | | |
|---|---|---|---|---|---|---|---|---|---|---|---|
| | 0 | 1 | 2 | 3 | 3.5 | 6 | 1 | 2 | 3 | 3.5 | 6 |
| CBT | $2.4x10^4$ | $5.5x10^4$ | $4x10^4$ | $2.9x10^5$ | $1.4x10^7$ | $4.5x10^8$ | $5x10^4$ | $3.6x10^4$ | $6x10^4$ | $<10^4$ | $2.4x10^6$ |
| H2S+ | <10 | $8.5x10^3$ | $4.1x10^3$ | $<10^4$ | $1.1x10^4$ | $6x10^6$ | $1.7x10^4$ | $2x10^3$ | $1x10^4$ | $3x10^3$ | $2.7x10^4$ |
| Yeast | $1.8x10^2$ | $3.2x10^4$ | $1.5x10^4$ | $1.3x10^4$ | $8x10^4$ | $3.1x10^4$ | $3.7x10^4$ | $2.1x10^4$ | $2.3x10^4$ | $6x10^3$ | $1.9x10^4$ |
| Mould | <100 | <100 | <100 | <100 | <100 | <100 | <100 | <100 | <100 | <100 | <100 |
| Lactic | 320 | 320 | $8.2x10^3$ | $3x10^4$ | $6.4x10^5$ | $1.7x10^4$ | 250 | $1.5x10^3$ | $2.3x10^3$ | $5x10^2$ | $4.2x10^5$ |

Table 1D

Rice with tomatoes + tuna fish + a twig of summer savory in MAP1

| **MAP 1** | Time 0 | | | 3 days | | | 5 days | | |
|---|---|---|---|---|---|---|---|---|---|
| | Tuna fish | Rice tomatoes | Mix | Tuna fish | Rice tomatoes | Mix | Tuna fish | Rice tomatoes | Mix |
| CBT | $7.2*10^5$ | $1*10^3$ | $9*10^4$ | $2.4*10^8$ | $1.9*10^3$ | $4*10^6$ | $2.1*10^9$ | $7.1*10^6$ | $4*10^8$ |
| $H_2S$+ | 500 | nd | 500 | <100 | Nd | $2*10^2$ | 270 | nd | 900 |
| Fecal Colif. | 9.5 | Ass 1g | nd | nd | Nd | nd | 2.5 | 2.5 | 0.4 |
| *E. coli* | Ass 1g | Ass 1g | nd | nd | Nd | nd | Ass 1g | Ass 1g | Ass 1g |
| Yeast | nd | $1.4*10^4$ | $7*10^3$ | nd | Nd | nd | nd | $1*10^3$ | $1*10^5$ |
| Mould | nd | <100 | <100 | nd | Nd | nd | nd | $1*10^3$ | <1000 |
| total Lactic | 40 | <10 | 10 | $1.4*10^6$ | <10 | $3*10^4$ | $4*10^7$ | $1.1*10^5$ | $1.3*10^7$ |
| *Leuconostoc* spp. | <100 | <100 | <100 | nd | Nd | nd | | | |
| *St. aureus* | 100 | 100 | nd | nd | Nd | nd | <100 | <100 | <100 |
| *B. cereus* | <100 | <100 | nd | nd | Nd | nd | nd | <100 | <100 |
| Cl. $H_2S$+ | Ass 1g | Ass 1g | nd | nd | Nd | nd | Ass 1g | Ass 1g | 0.4 |
| *Salmonella* | nd | nd | Ass 25g | nd | Nd | nd | nd | nd | |
| *Listeria* | nd | nd | Ass 25g | nd | Nd | nd | nd | nd | |
| *E. coli* O:H157 | nd | nd | Ass 10g | nd | Nd | nd | nd | nd | |

Table 2D

Rice with tomatoes + tuna fish + a twig of summer savory in MAP2

| MAP 2 | Time 0 | | | 3 days | | | 5 days | | |
|---|---|---|---|---|---|---|---|---|---|
| | Tuna fish | Rice tomatoes | Mix | Tuna fish | Rice tomatoes | Mix | Tuna fish | Rice tomatoes | Mix |
| CBT | $7.2*10^5$ | $1*10^3$ | $9*10^4$ | $1.5*10^6$ | $3.7*10^3$ | $8*10^5$ | $1.6*10^6$ | $4*10^3$ | $2*10^5$ |
| $H_2S$+ | 500 | nd | 500 | $1*10^2$ | nd | $1.7*10^3$ | 670 | nd | 600 |
| Fecal Colif. | 9.5 | Ass 1g | nd | nd | nd | nd | 4.5 | Ass 1g | 2.5 |
| *E. coli* | Ass 1g | Ass 1g | nd | nd | nd | nd | Ass 1g | Ass 1g | Ass 1g |
| Yeast | nd | $1.4*10^4$ | $7*10^3$ | nd | nd | nd | nd | <1000 | $8*10^3$ |
| Mould | nd | <100 | <100 | nd | nd | nd | nd | <1000 | $1*10^3$ |
| total Lactic | 40 | <10 | 10 | $3..2*10^4$ | 120 | $4*10^3$ | $7.1*10^4$ | 300 | $8.5*10^4$ |
| *Leuconostoc* spp. | <100 | <100 | <100 | nd | nd | nd | | | <100 |
| *St. aureus* | 100 | 100 | nd | nd | nd | nd | <100 | <100 | <100 |
| *B. cereus* | <100 | <100 | nd | nd | nd | nd | nd | <100 | <100 |
| Cl. $H_2S$+ | Ass 1g | Ass 1g | nd | nd | nd | nd | Ass 1g | Ass 1g | Ass 1g |
| *Salmonella* | nd | nd | Ass 25g | nd | nd | nd | nd | nd | Ass 25g |
| *Listeria* | nd | nd | Ass 25g | nd | nd | nd | nd | nd | Ass 25 g |
| *E. coli* O:H157 | nd | nd | Ass 10g | nd | nd | nd | nd | nd | Ass10 g |

Table 3D

Classical Japanese Sushi with tuna fish: air/MAP2 comparison

| | | AIR | | | | | MAP 2 | | | | |
|---|---|---|---|---|---|---|---|---|---|---|---|
| | 0 | 1 | 2 | 3 | 3,5 | 6 | 1 | 2 | 3 | 3,5 | 6 |
| CBT | $1.4x10^{4}$ | $2.6x10^{4}$ | $2.4x10^{7}$ | $2.0x10^{6}$ | $6.0x10^{7}$ | $1.4x10^{7}$ | $1.5x10^{4}$ | $1.8x10^{5}$ | $4.8x10^{4}$ | $1.6x10^{4}$ | $1.4x10^{6}$ |
| H2S+ | 20 | $2.4x10^{2}$ | $2.5x10^{3}$ | $5.8x10^{2}$ | $2.2x10^{3}$ | 90 | <10 | $5.6x10^{2}$ | $5.0x10^{2}$ | $1.9x10^{2}$ | $2.7x10^{3}$ |
| Yeast | $1.9x10^{3}$ | $4.3x10^{3}$ | $3.4x10^{3}$ | $1.4x10^{3}$ | $4.6x10^{3}$ | $2.7x10^{3}$ | $1.8x10^{3}$ | $9.0x10^{2}$ | $3.3x10^{3}$ | $1.3x10^{3}$ | $2.7x10^{3}$ |
| Mould | <100 | <100 | <100 | <100 | <100 | <100 | <100 | <100 | <100 | <100 | <100 |
| Lactic | $6.0x10^{2}$ | $1.3x10^{3}$ | $9.0x10^{3}$ | $2.2x10^{3}$ | $1.6x10^{5}$ | $8.0x10^{4}$ | $9.0x10^{2}$ | $2.2x10^{3}$ | $1.3x10^{3}$ | $1.6x10^{3}$ | $3.3x10^{5}$ |
| Cl. H2S + | ass | | | | | | | | | | |
| *B. cereus* | <100 | | | | | | | | | | |
| *St. aureus* | <100 | | | | | | | | | | |

Table 1E

Rice with sepia + cuttlefish in MAP1

| **MAP 1** | Time 0 | | | 3 days | | | 5 days | | |
|---|---|---|---|---|---|---|---|---|---|
| | Cuttle-fish | Rice with sepia | Mix | Cuttle-fish | Rice with sepia | Mix | Cuttle-fish | Rice with sepia | Mix |
| CBT | $1.8x10^4$ | 100 | $5.9*10^3$ | $2.6x10^4$ | 50 | $2.1x10^4$ | $6x10^6$ | <100 | $1x10^6$ |
| $H_2S$+ | <10 | nd | <10 | $9.3x10^3$ | n.d. | $6x10^3$ | $7x10^7$ | n.d. | $6.7x10^6$ |
| Fecal Colif. | Ass 1g | 0.9 | nd | n.d. | n.d. | n.d. | n.d. | n.d. | n.d. |
| *E. coli* | Ass 1g | Ass 1g | nd | n.d. | n.d. | n.d. | n.d. | n.d. | n.d. |
| Yeast | nd | 100 | $4.6x10^3$ | n.d. | n.d. | n.d. | n.d. | 100 | $7x10^4$ |
| Mould | nd | <100 | <100 | n.d. | n.d. | n.d. | nd | n.d. | n.d. |
| total Lactic | $1.8x10^3$ | <10 | $7.1x10^2$ | $1.1x10^4$ | | $5x10^3$ | $2.2x10^5$ | n.d. | $1.1x10^6$ |
| *Leuconostoc* spp. | <100 | <100 | <100 | n.d. | n.d. | n.d. | nd | n.d. | n.d. |
| *St. aureus* | $1.8x10^3$ | <100 | nd | n.d. | n.d. | n.d. | $1.1x10^3$ | <100 | 400 |
| *B. cereus* | <100 | <100 | nd | n.d. | n.d. | n.d. | nd | n.d. | n.d. |
| Cl. $H_2S$+ | Ass 1g | Ass 1g | nd | n.d. | n.d. | n.d. | nd | n.d. | n.d. |
| *Salmonella* | nd | nd | | n.d. | n.d. | n.d. | nd | n.d. | |
| *Listeria* | nd | nd | Ass 25g | n.d. | n.d. | n.d. | nd | n.d. | Ass. |
| *E. coli* O:H157 | nd | nd | Ass 10g | n.d. | n.d. | n.d. | nd | n.d. | |

Table 2E

Rice with sepia + cuttlefish in MAP2

| MAP 2 | Time 0 | | | 3 days | | | 5 days | | |
|---|---|---|---|---|---|---|---|---|---|
| | Cuttlefish | Rice with sepia | Mix | Cuttlefish | Rice with sepia | Mix | Cuttlefish | Rice with sepia | Mix |
| CBT | $1.8x*10^4$ | 100 | $5.9*10^3$ | $4.2*10^3$ | $5.1x10^2$ | $8.1*10^3$ | $1.1*10^5$ | <100 | $1.8*10^4$ |
| $H_2S$+ | <10 | nd | nd | $9*10^3$ | nd | $2*10^3$ | $5.2*10^6$ | nd | $3*10^5$ |
| Fecal Colif. | | Ass 1g | nd | nd | nd | nd | nd | nd | nd |
| *E. coli* | Ass 1g | Ass 1g | nd | nd | nd | nd | nd | nd | nd |
| Yeast | nd | 100 | $4.6x10^3$ | nd | nd | nd | nd | <100 | $8.9*10^3$ |
| Mould | nd | <100 | <100 | nd | nd | nd | nd | <100 | <100 |
| total Lactic | $1.8x*10^3$ | <10 | $7.1x10^2$ | $1.6*10^4$ | <10 | $1*10^3$ | $7.8*10^4$ | <10 | $1*10^5$ |
| *Leuconostoc* spp. | <100 | <100 | <100 | nd | nd | nd | nd | nd | nd |
| *St. aureus* | $1.8x10^3$ | <100 | nd | nd | nd | nd | $4*10^3$ | <100 | $3*10^2$ |
| *B. cereus* | <100 | <100 | nd | nd | nd | nd | <100 | <100 | <100 |
| Cl. $H_2S$+ | Ass 1g | Ass 1g | nd | nd | nd | nd | nd | nd | nd |
| *Salmonella* | nd | nd | | nd | nd | nd | nd | nd | |
| *Listeria* | nd | nd | Ass 25g | nd | nd | nd | nd | nd | Ass 25g |
| *E. coli* O:H157 | nd | nd | Ass 10g | nd | nd | nd | nd | nd | |

Table 3E

Classical Japanese Sushi with cuttlefish: air/MAP2 comparison

| | | AIR | | | | | MAP2 | | | | |
|---|---|---|---|---|---|---|---|---|---|---|---|
| | 0 | 1 | 2 | 3 | 3.5 | 6 | 1 | 2 | 3 | 3.5 | 6 |
| CBT | $3x10^4$ | $2.9x10^4$ | $2x10^4$ | $8x10^4$ | $4x10^4$ | $2.1x10^6$ | $5x10^4$ | $3.7x10^4$ | $4x10^4$ | $4x10^4$ | $2x10^5$ |
| H2S+ | <10 | 10 | <100 | $1.1x10^4$ | $1.4x10^4$ | $<10^3$ | <10 | <100 | <10 | <100 | $1x10^2$ |
| Yeast | $1.9x10^4$ | $2.5x10^4$ | $2.8x10^4$ | $2x10^4$ | $4.2x10^4$ | $2.1x10^4$ | $5x10^4$ | $2.1x10^4$ | $1x10^4$ | $4.7x10^4$ | $6x10^4$ |
| Mould | <100 | <100 | <100 | <100 | <100 | <100 | <100 | $3x10^3$ | <100 | <100 | <100 |
| Lactic | $9x10^3$ | $6x10^3$ | $6x10^3$ | $1.6x10^4$ | $1x10^5$ | $5.9x10^5$ | $9x10^3$ | $8x10^3$ | $2.3x10^4$ | $1x10^4$ | $1.1x10^5$ |
| Stap.aureus | $1.6x10^3$ | | | | | | | | | | |
| Coliforms | Ass 1g | | | | | | | | | | |
| E.coli | Ass 10g | | | | | | | | | | |
| Salmonella | Ass 25g | | | | | | | | | | |

Table 1F
Yellow rice + prawns in MAP1

| MAP 1 | Time 0 | | | 3 days | | | 5 days | | |
|---|---|---|---|---|---|---|---|---|---|
| | Prawns | Yellow rice | Mix | Prawns | Yellow rice | Mix | Prawns | Yellow rice | Mix |
| CBT | $4*10^5$ | $1*10^4$ | $1.2*10^5$ | $4*10^7$ | $1.12*10^6$ | $3*10^7$ | $1.3*10^9$ | $6.5*10^7$ | $4.4*10^8$ |
| $H_2S+$ | $1*10^5$ | nd | $3.5*10^4$ | $3*10^8$ | nd | $3*10^7$ | $4*10^8$ | nd | $3*10^8$ |
| Fecal Colif. | Ass 1g | 4.5 | nd | nd | nd | nd | nd | 0.9 | nd |
| *E. coli* | Ass 1g | Ass 1g | nd | nd | nd | nd | nd | Ass 1g | nd |
| Yeast | nd | <100 | 100 | nd | nd | nd | nd | <100 | 100 |
| Mould | nd | <100 | <100 | nd | nd | nd | nd | <100 | <100 |
| total Lactic | 400 | <10 | $1.1*10^4$ | $1.4*10^6$ | $5*10^2$ | $9*10^5$ | $3*10^7$ | $1*10^5$ | $8*10^6$ |
| *St. aureus* | 100 | 100 | nd | nd | nd | nd | 100 | 200 | 100 |
| *B. cereus* | nd | <100 | nd | nd | nd | nd | nd | nd | nd |
| Cl. $H_2S+$ | Ass 1g | Ass 1g | nd | nd | nd | nd | nd | nd | |
| *Salmonella* | nd | nd | Ass 25g | nd | nd | nd | nd | nd | Ass 25g |
| *Listeria* | nd | nd | Ass 25g | nd | nd | nd | nd | nd | |
| *E. coli* O:H157 | nd | nd | | nd | nd | nd | | | |

Table 2F
Yellow rice + prawns in MAP2

| MAP 2 | Time 0 | | | 3 days | | | 5 days | | |
|---|---|---|---|---|---|---|---|---|---|
| | Prawns | Yellow Rice | Mix | Prawns | Yellow Rice | Mix | Prawns | Yellow Rice | Mix |
| CBT | $4*10^5$ | $1*10^4$ | $1.2*10^5$ | $4*10^6$ | $4*10^6$ | $5.3*10^6$ | $2.8*10^7$ | $7*10^5$ | $2*10^8$ |
| $H_2S$+ | $1*10^5$ | nd | $3.5*10^4$ | $4.7*10^6$ | nd | $3*10^7$ | $4*10^7$ | nd | $1*10^7$ |
| fecal Colif. | Ass 1g | 4.5 | nd | nd | nd | nd | nd | nd | nd |
| *E. coli* | Ass 1g | Ass 1g | nd | nd | nd | nd | nd | nd | nd |
| Yeast | nd | <100 | 100 | nd | nd | nd | nd | <100 | <100 |
| Mould | nd | <100 | <100 | nd | nd | nd | nd | <100 | <100 |
| total Lactic | 400 | <10 | $1.1*10^4$ | $2*10^5$ | $6.9*10^2$ | $1*10^5$ | $1.7*10^7$ | $1.4*10^5$ | $1.2*10^6$ |
| *St. aureus* | 100 | 100 | nd | Nd | nd | nd | 100 | 200 | <100 |
| *B. cereus* | nd | <100 | nd | nd | nd | nd | nd | nd | nd |
| Cl. $H_2S$+ | Ass 1g | Ass 1g | nd | nd | nd | nd | nd | nd | nd |
| *Salmonella* | nd | nd | Ass 25g | nd | nd | nd | nd | nd | Ass 25g |
| *Listeria* | nd | nd | Ass 25g | nd | nd | nd | nd | nd | Ass 25g |
| *E. coli* O:H157 | nd | nd | | nd | nd | nd | nd | nd | |

Table 3F

Classical Japanese Sushi with prawns: air/MAP2 comparison

| | | AIR | | | | | MAP2 | | | | |
|---|---|---|---|---|---|---|---|---|---|---|---|
| | 0 | 1 | 2 | 3 | 3.5 | 6 | 1 | 2 | 3 | 3.5 | 6 |
| CBT | $8x10^3$ | $1.9x10^4$ | $1.9x10^5$ | $2.4x10^6$ | $3x10^6$ | $3x10^8$ | $6.4x10^3$ | $1.7x10^4$ | $8x10^4$ | $3x10^4$ | $2x10^6$ |
| H2S+ | $1.3x10^2$ | $1.2x10^4$ | $2.8x10^3$ | $1.3x10^6$ | $8x10^4$ | $2.4x10^7$ | $1x10^2$ | $1x10^3$ | $2x10^4$ | $5x10^3$ | $2x10^3$ |
| Yeast | $3.8x10^3$ | $6.1x10^3$ | $6.8x10^3$ | $1.9x10^4$ | $1x10^4$ | $3x10^3$ | $1.9x10^3$ | $6.6x10^3$ | $2.8x10^3$ | $6.7x10^3$ | $1x10^3$ |
| Mould | <100 | <100 | <100 | <100 | <100 | <100 | <100 | <100 | <100 | <100 | |
| Lactic | $6.5x10^2$ | $3x10^2$ | $5.8x10^3$ | $3.4x10^3$ | $1.1x10^4$ | $3x10^5$ | $1x10^2$ | $3x10^3$ | $4.3x10^3$ | $4x10^3$ | $2.3x10^5$ |

**Claims**

1. A food product based on fish products, **characterized in that** it includes at least one fish product on a supporting dish comprising starches and/or vegetables, said food product being packaged in a modified atmosphere, ready for use.

2. The food product according to claim 1, **characterized in that** it includes at least one fish product on a supporting dish comprising starches and vegetables.

3. The food product according to claim 1, **characterized in that** it comprises a packaging in a modified atmosphere consisting of a binary' or tertiary mixture of gases selected from oxygen, nitrogen and carbon dioxide.

4. The food product according to claim 3, **characterized in that** the modified atmosphere consists of a mixture of gases consisting of nitrogen and carbon dioxide.

5. The food product according to claim 3, **characterized in that** the concentration of $CO_2$ is equal to or greater than 30%.

6. The food product according to claim 3, **characterized in that** the concentration of $CO_2$ is equal to or greater than 40%.

7. The food product according to claim 3, **characterized in that** the modified atmosphere consists of $CO_2$ (40%) and nitrogen (60%).

8. The food product according to claim 1, **characterized in that** it comprises at least one fish product prevalently selected from fish products of the Mediterranean Sea, in particular prawns, tuna fish, angler fish, salmon, sword-fish, sardines, sea bass, gilthead bream, scorpion fish, "gallinella", clams, mackerel, anchovies, octopus, squid, cuttlefish.

9. The food product according to claim 1, **characterized in that** the starches are cereals, in particular wheat, rice and barley.

10. The food product according to claim 1, **characterized in that** the starches are selected from durum wheat bran dough, such as for example spaghetti, rice-shaped pasta, etc. and Italian-type rice such as Carnaroli rice.

11. The food product according to claim 1, **characterized in that** it includes a supporting dish comprising vegetables which can be selected from greens, aubergines, salads.

12. The food product according to claim 1, **characterized in that** it comprises the presence of simple or complex condiments, vegetables, preparations based on vegetables.

13. The food product according to claim 12, **characterized in that** the simple condiments are selected from oil, lemon and/or soya bean, oil and lemon emulsion, soy sauce in extra virgin olive oil.

14. The food product according to claim 12, **characterized in that** the complex condiments are selected from olive sauce, aubergine ratatouille, pesto with toasted pine kernels.

15. The food product according to claim 1, **characterized in that** it comprises other ingredients such as salt, pepper, vinegar, basil, sugar, black olives, hot pepper, capers, pine kernels, fruit such as raisins and oranges, Parmesan cheese, bread-crumbs, parsley, garlic.

16. The food product according to claim 12, **characterized in that** the vegetables are selected from lettuce leaves or any other type of salad, tomatoes, carrots, vegetable marrows, leeks, greens, onions, celery.

17. The food product according to claim 1, **characterized in that** the product packaged in a modified atmosphere is preserved until use at a temperature (T) lower than 4-5°C.

18. A procedure for the preparation of the food product based on fish products according to any of the previous claims, **characterized in that** it comprises the following steps:

a) optional cooking treatment of the fish product;
b) mixing the fish product treated with other possible ingredients;
c) cooking treatment of the supporting dish;
d) positioning of the product obtained under step b) onto the supporting dish treated in the previous step;
e) insertion of the end-product in a wrapping and packaging of the end-product in a modified atmosphere;
f) positioning of the packaged product in a structure which comprises at least one housing.

**19.** The procedure according to claim 18, **characterized in that** the cooking treatment of the fish product is selected from boiling, scalding, flash-frying, steaming and/or marinading.

**20.** The procedure according to claim 18, **characterized in that** the cooking treatment of the supporting dish is a boiling treatment.

**21.** The procedure according to claim 18, **characterized in that** the product is subjected to further treatment before and/or after the packaging step e) in a modified atmosphere, treatment such as irradiation and/or immersion of the product in solutions of K sorbate, lactic acid, polyphosphates, sodium chloride, also variably mixed with each other.

**22.** The procedure according to claim 18, **characterized in that** the structure comprises at least two housings.

**23.** The procedure according to claim 18, **characterized in that** each housing contains a food product based on fish products, including at least one fish product on a supporting dish comprising starches and/or vegetables, having the same composition, packaged singly in a modified atmosphere.

**24.** The procedure according to claim 18, **characterized in that** each housing contains a food product based on fish products, including at least one fish product on a supporting dish comprising starches and/or vegetables, having a different composition, packaged singly in a modified atmosphere.

**25.** The procedure according to claim 18, **characterized in that** the structure comprises further different housings.

**26.** The procedure according to claim 25, **characterized in that** condiments packaged separately such as sachets containing condiments, such as oil and lemon emulsion, soy sauce in extra virgin olive oil, and/or the necessary material for use, such as paper napkins and disposable cutlery, packaged separately, are inserted in the further different housings included in the structure.

Fig.1A

Evolution of bacterial charge in sword fish-couscous mixture

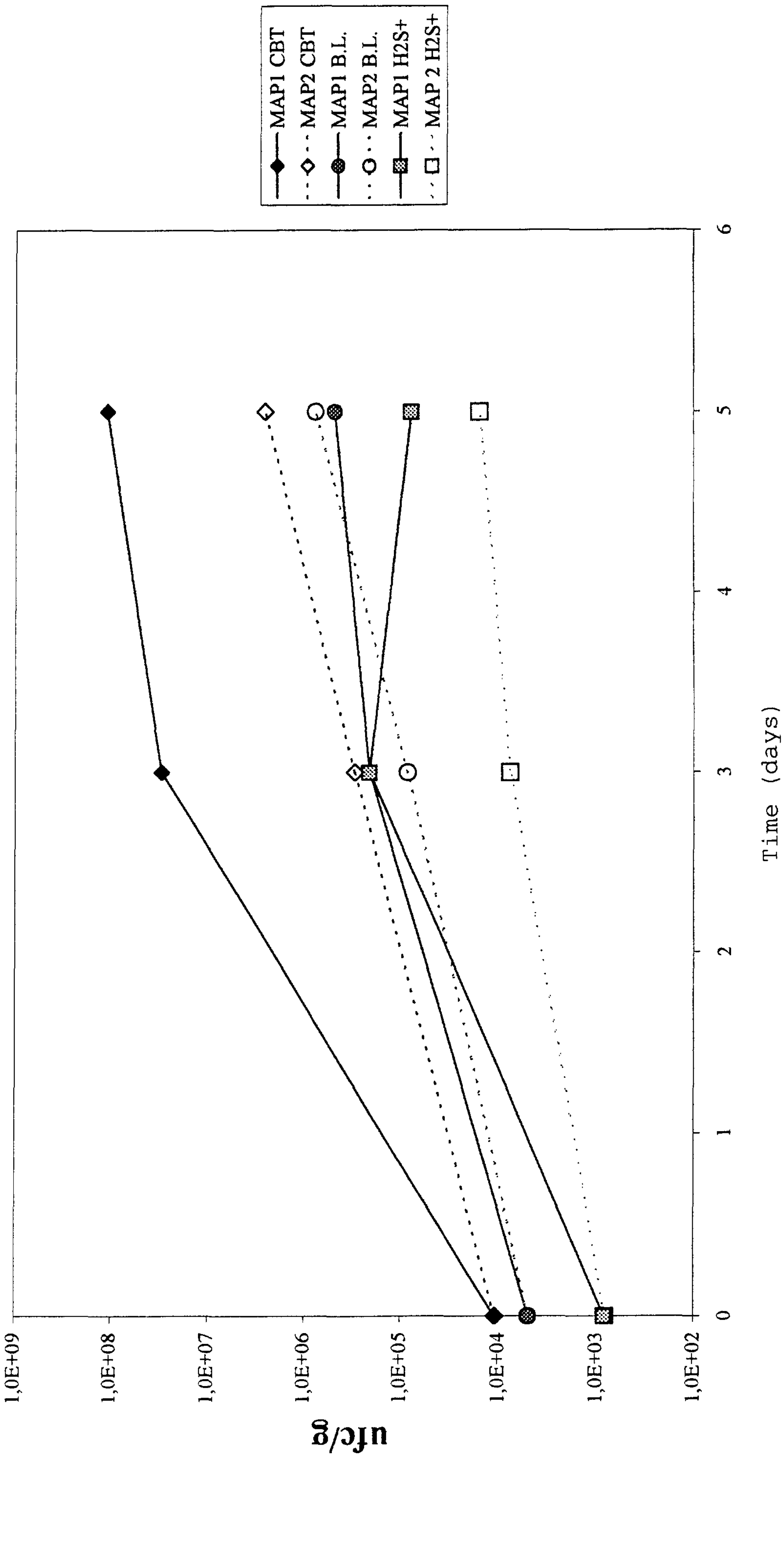

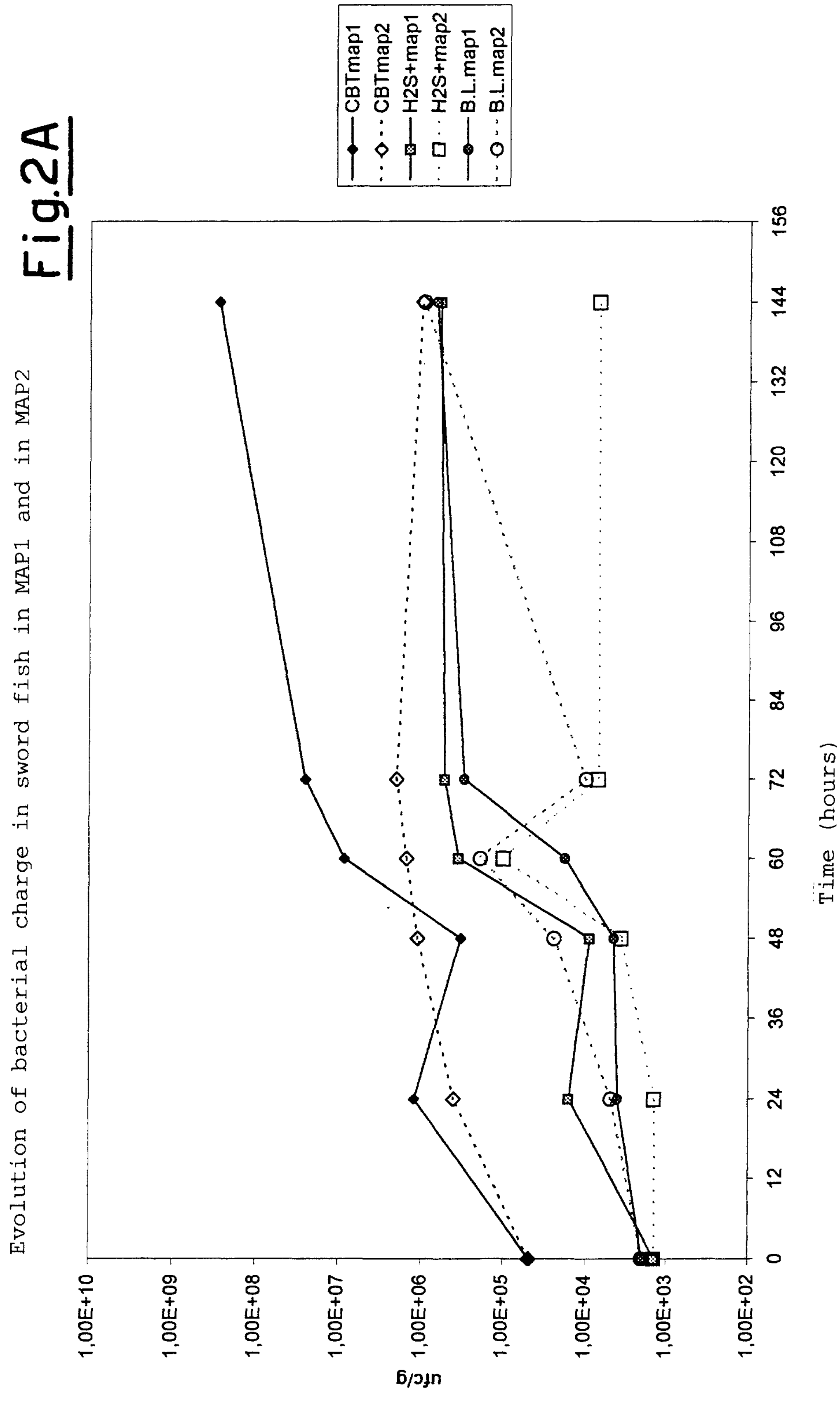
Evolution of bacterial charge in sword fish in MAP1 and in MAP2
ufc/g
1,00E+10
1,00E+09
1,00E+08
1,00E+07
1,00E+06
1,00E+05
1,00E+04
1,00E+03
1,00E+02
0
12
24
36
48
60
72
84
96
108
120
132
144
156
Time (hours)
CBTmap1
CBTmap2
H2S+map1
H2S+map2
B.L.map1
B.L.map2

Fig.2A

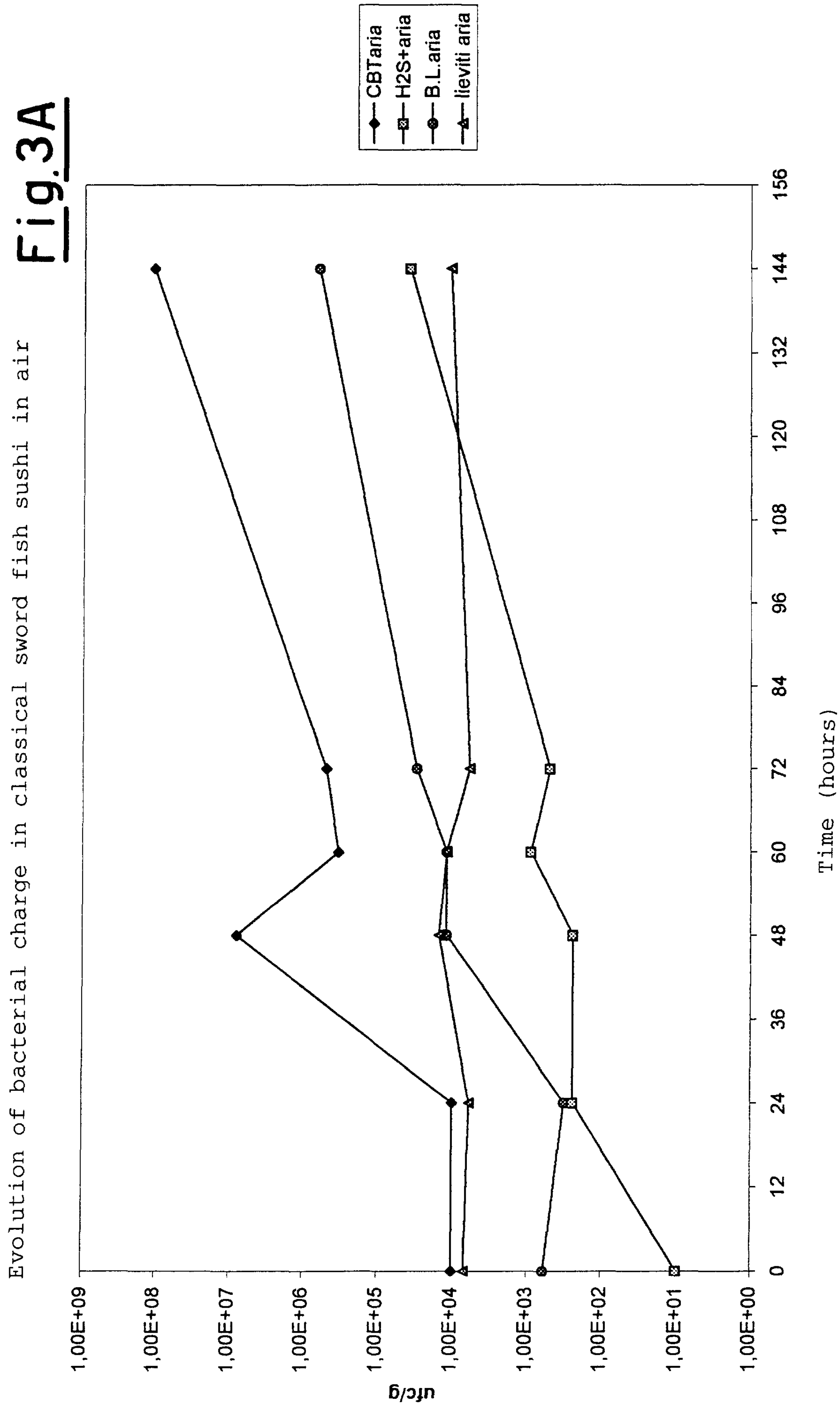
Evolution of bacterial charge in classical sword fish sushi in air
CBTaria
H2S+aria
B.L.aria
lieviti aria
ufc/g
1,00E+09
1,00E+08
1,00E+07
1,00E+06
1,00E+05
1,00E+04
1,00E+03
1,00E+02
1,00E+01
1,00E+00
0
12
24
36
48
60
72
84
96
108
120
132
144
156
Time (hours)

Fig.3A

Fig.4A

Evolution of bacterial charge in classical sword fish sushi in MAP2

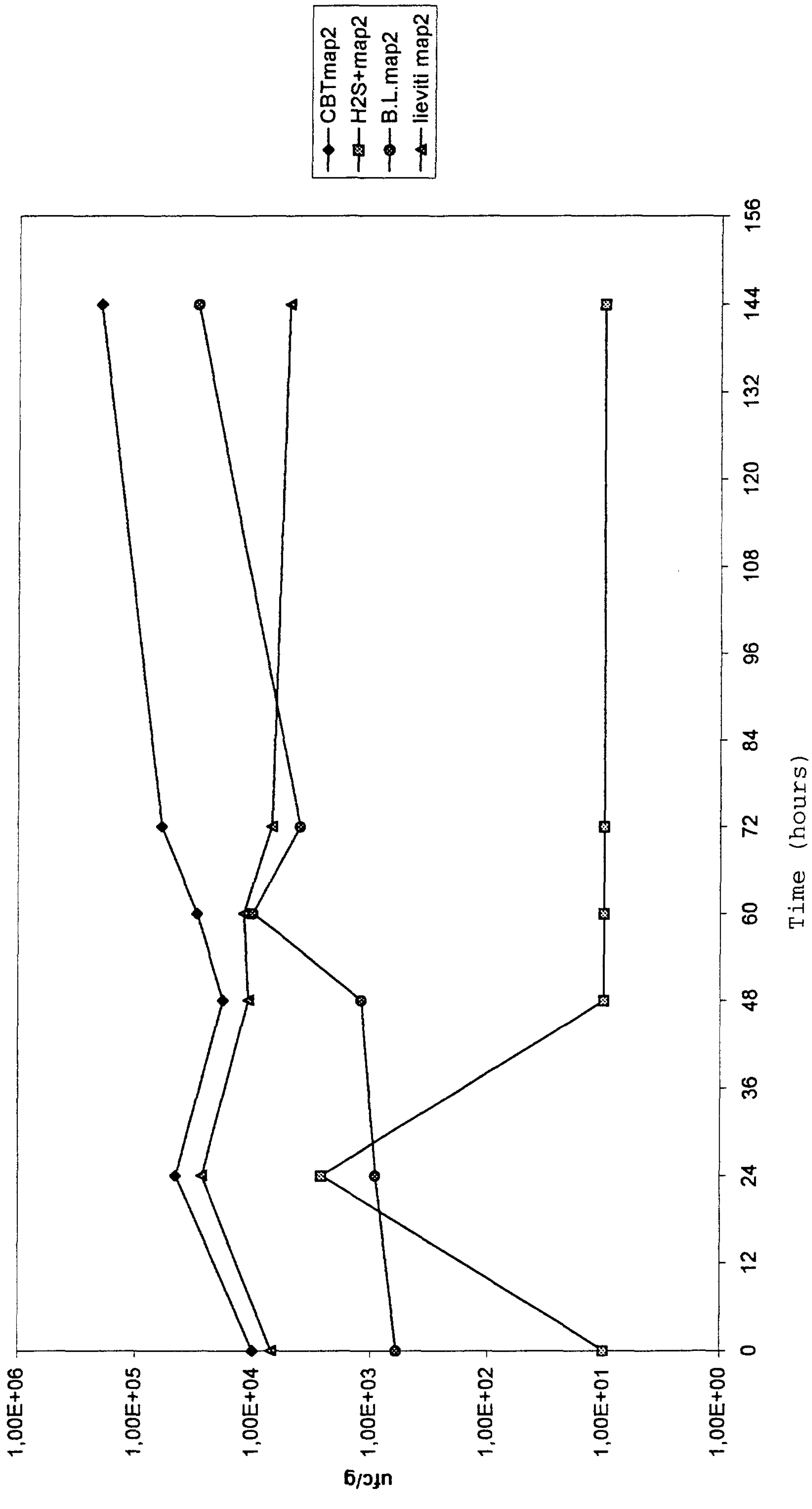

Fig.1B

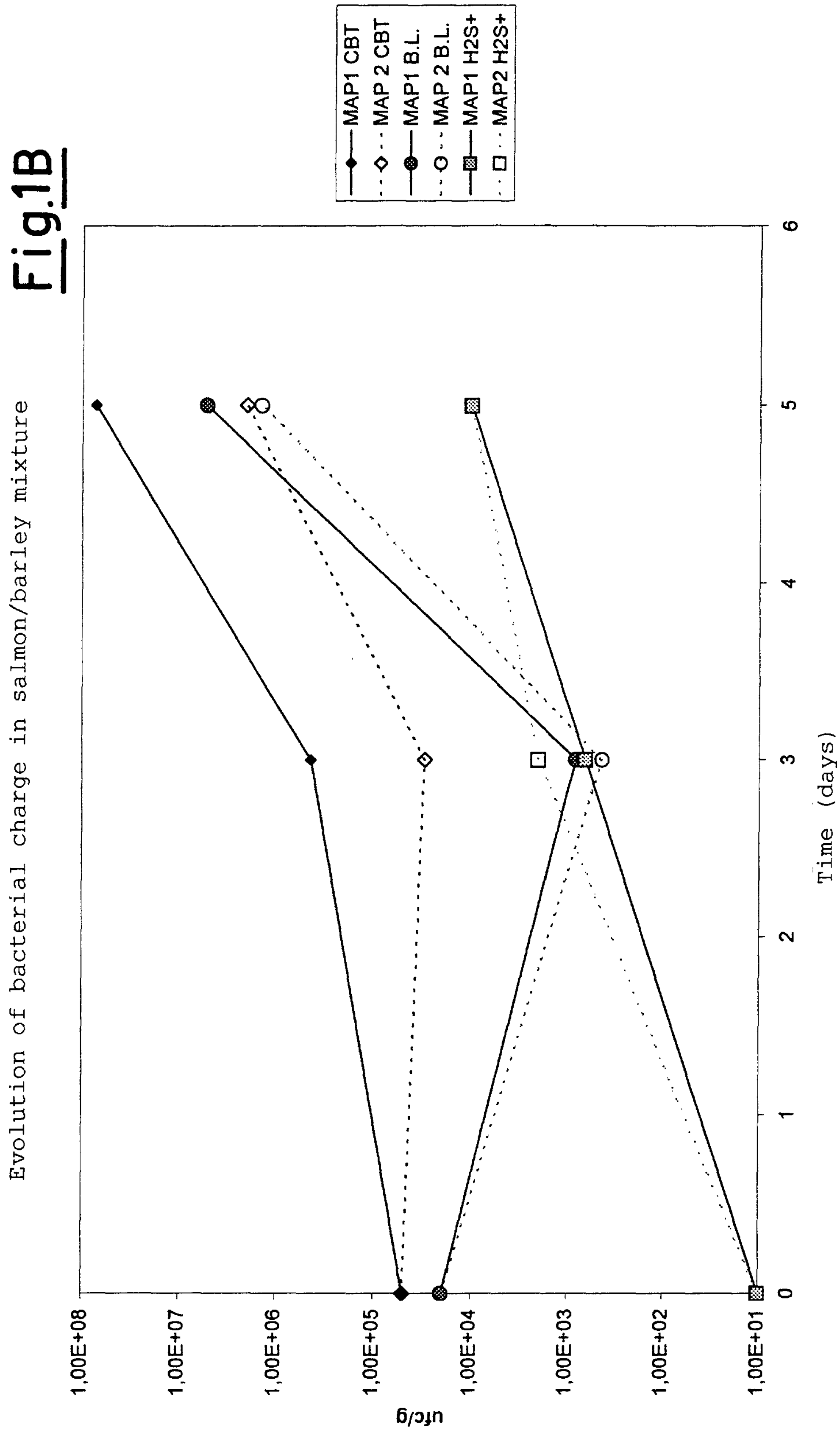
Evolution of bacterial charge in salmon/barley mixture
ufc/g
1,00E+08
1,00E+07
1,00E+06
1,00E+05
1,00E+04
1,00E+03
1,00E+02
1,00E+01
0
1
2
3
4
5
6
Time (days)
MAP1 CBT
MAP 2 CBT
MAP1 B.L.
MAP 2 B.L.
MAP1 H2S+
MAP2 H2S+

Fig.2B

Evolution of bacterial charge in salmon in MAP1 and in MAP2

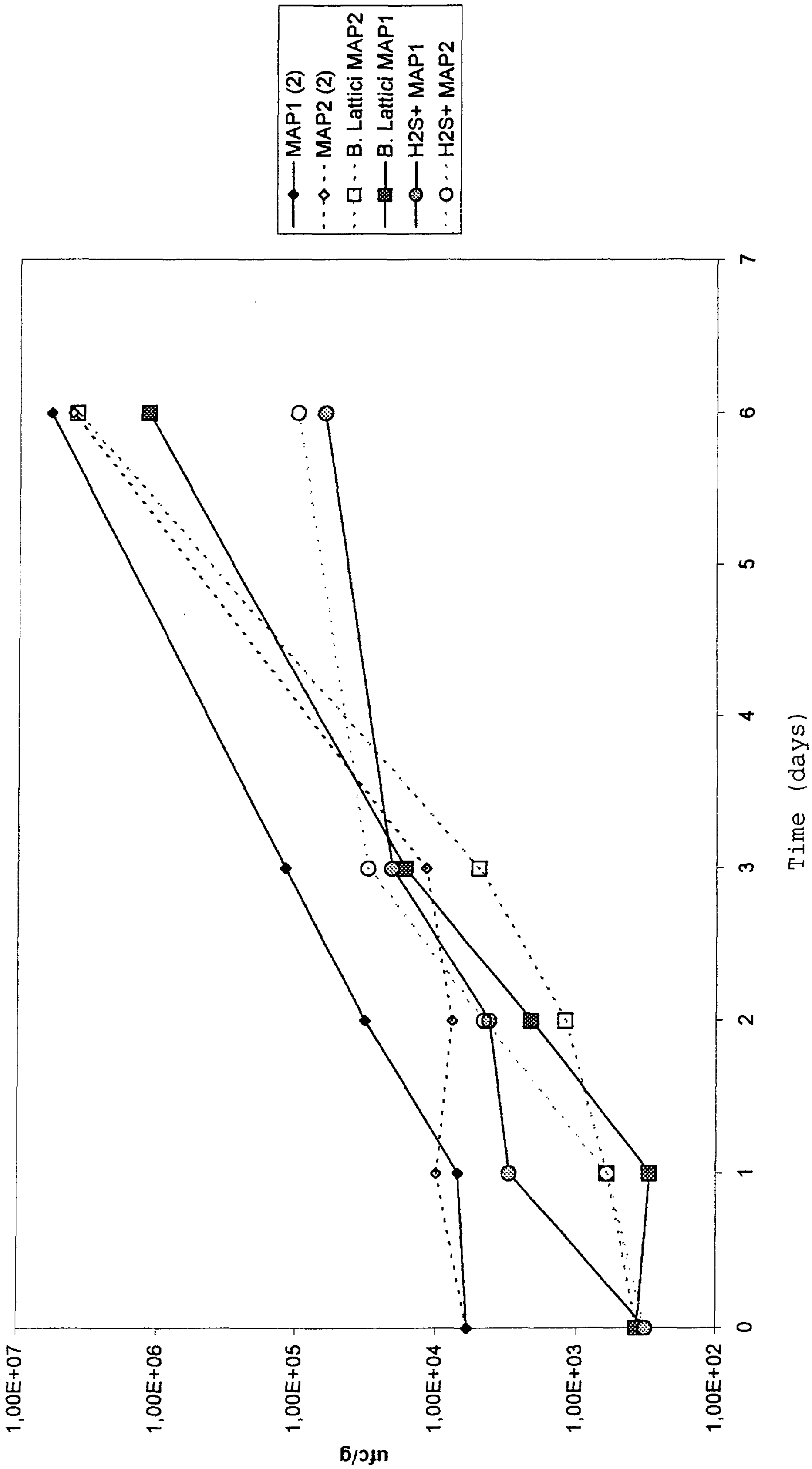

Fig.3B

Evolution of bacterial charge in classical salmon sushi in air

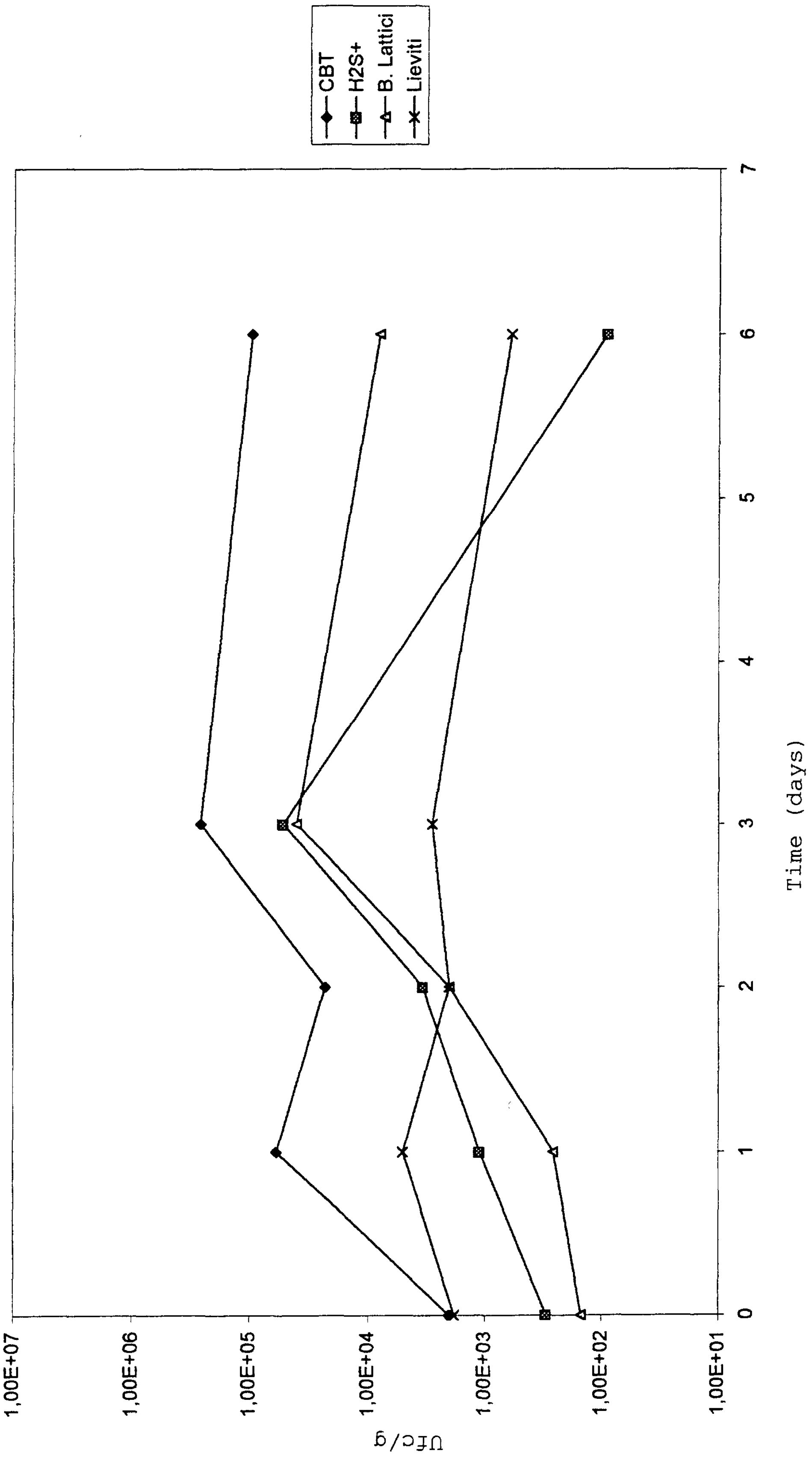

Fig.4B

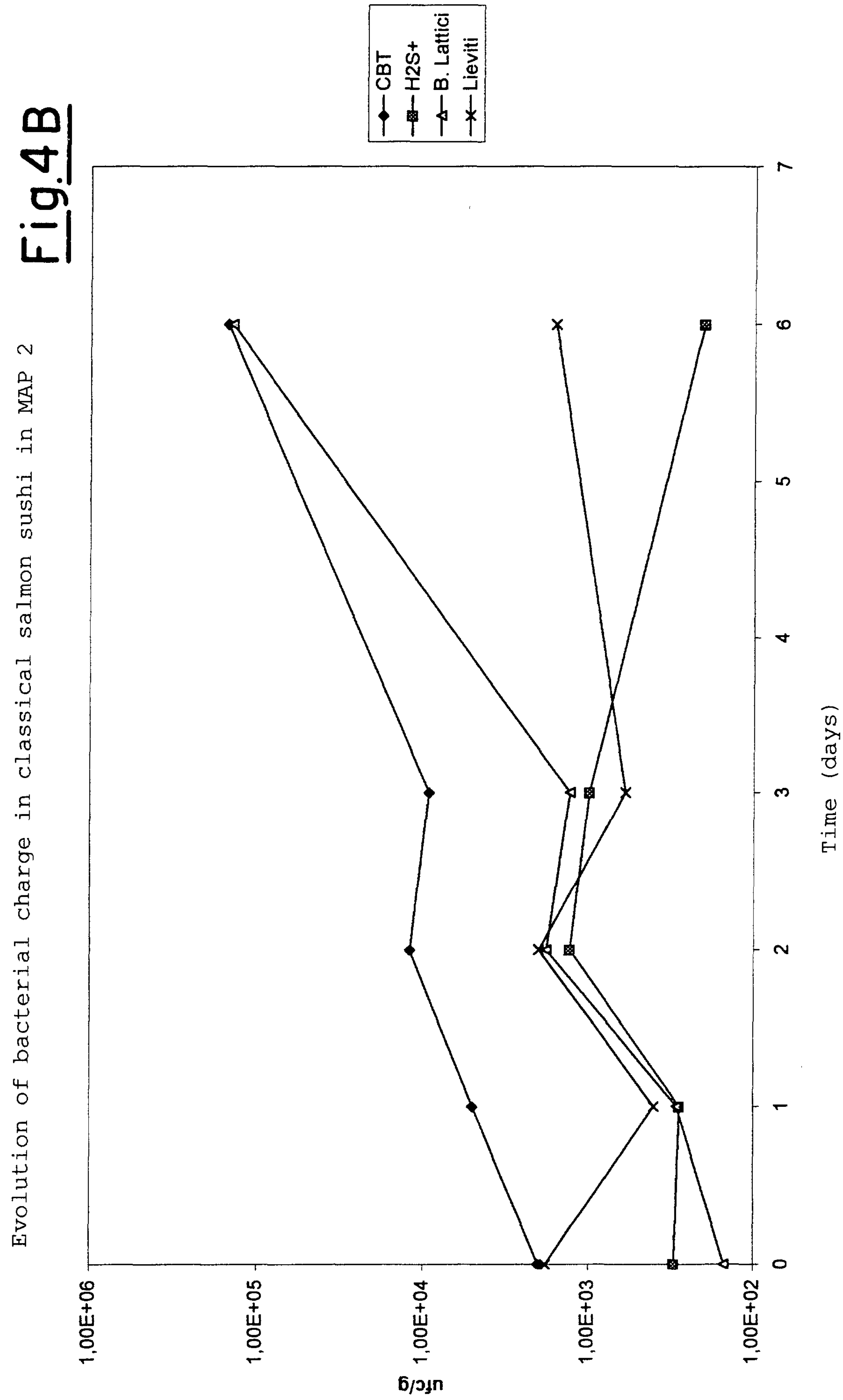
Evolution of bacterial charge in classical salmon sushi in MAP 2
ufc/g
1,00E+06
1,00E+05
1,00E+04
1,00E+03
1,00E+02
0
1
2
3
4
5
6
7
Time (days)
CBT
H2S+
B. Lattici
Lieviti

Fig.1C

Evolution of bacterial charge in scorpion fish/rice mixture

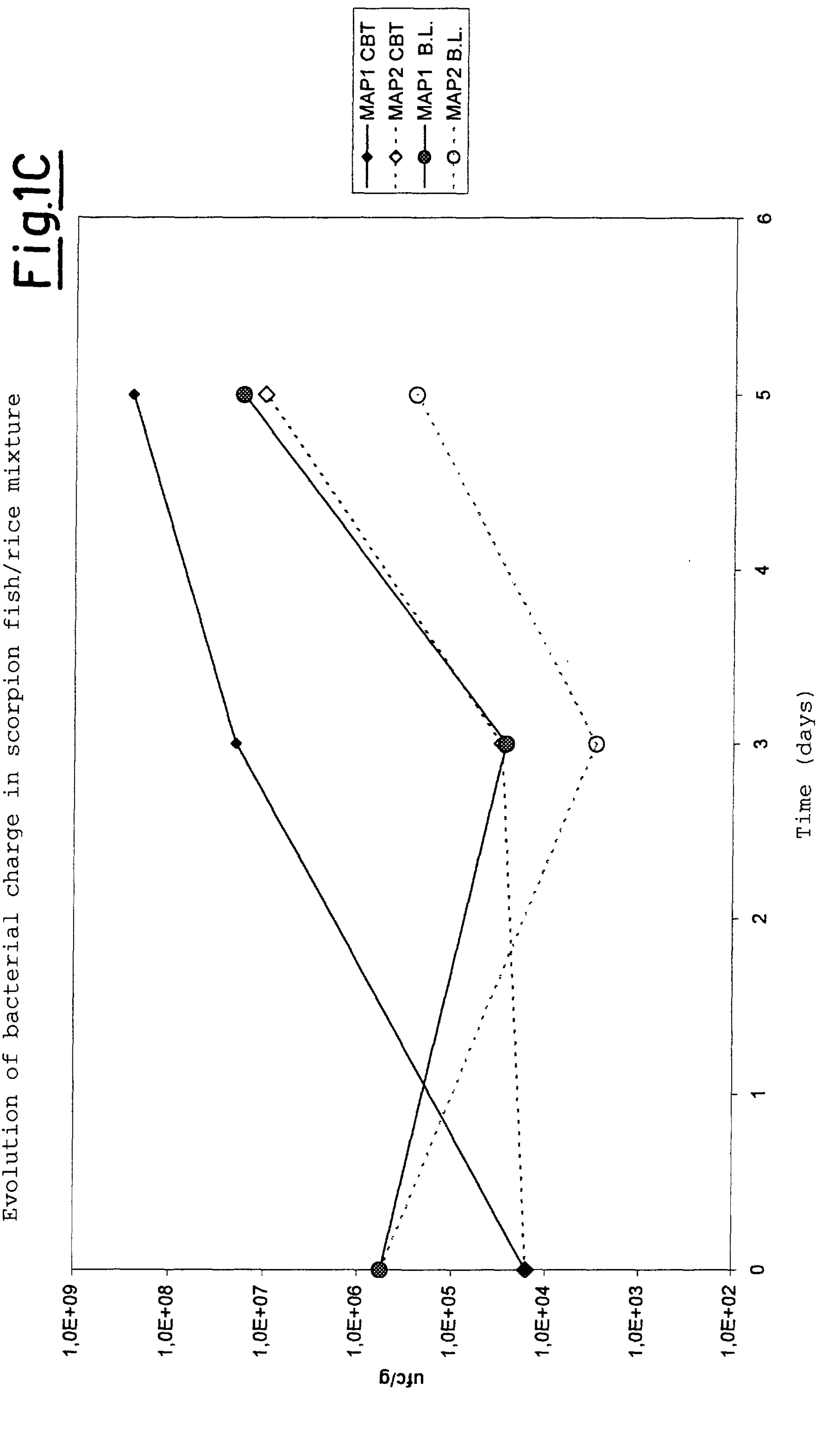

Fig.2C

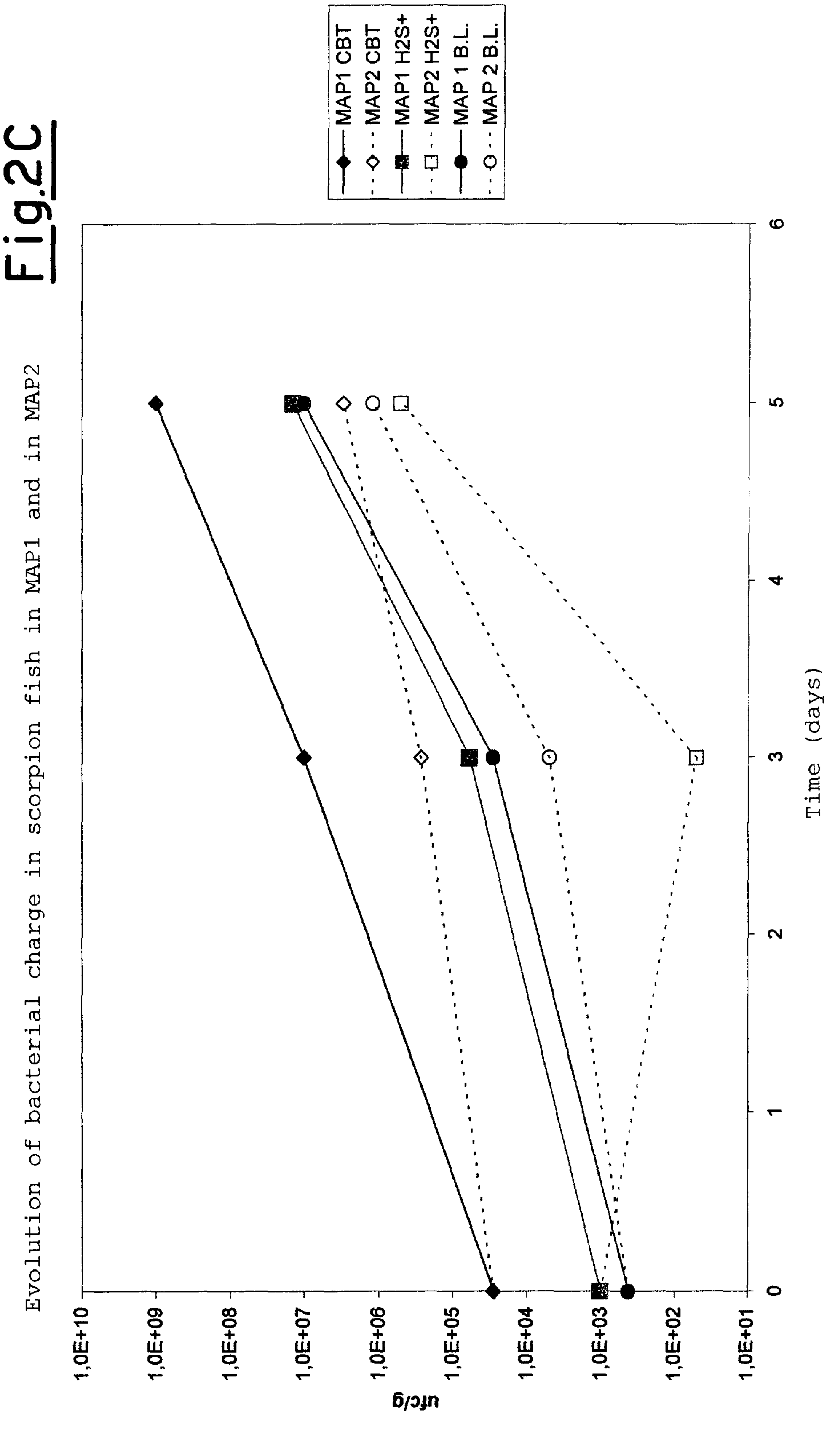
Evolution of bacterial charge in scorpion fish in MAP1 and in MAP2
ufc/g
1,0E+10
1,0E+09
1,0E+08
1,0E+07
1,0E+06
1,0E+05
1,0E+04
1,0E+03
1,0E+02
1,0E+01
0
1
2
3
4
5
6
Time (days)
MAP1 CBT
MAP2 CBT
MAP1 H2S+
MAP2 H2S+
MAP 1 B.L.
MAP 2 B.L.

Fig.3C

Evolution of bacterial charge in classical scorpion fish sushi in air

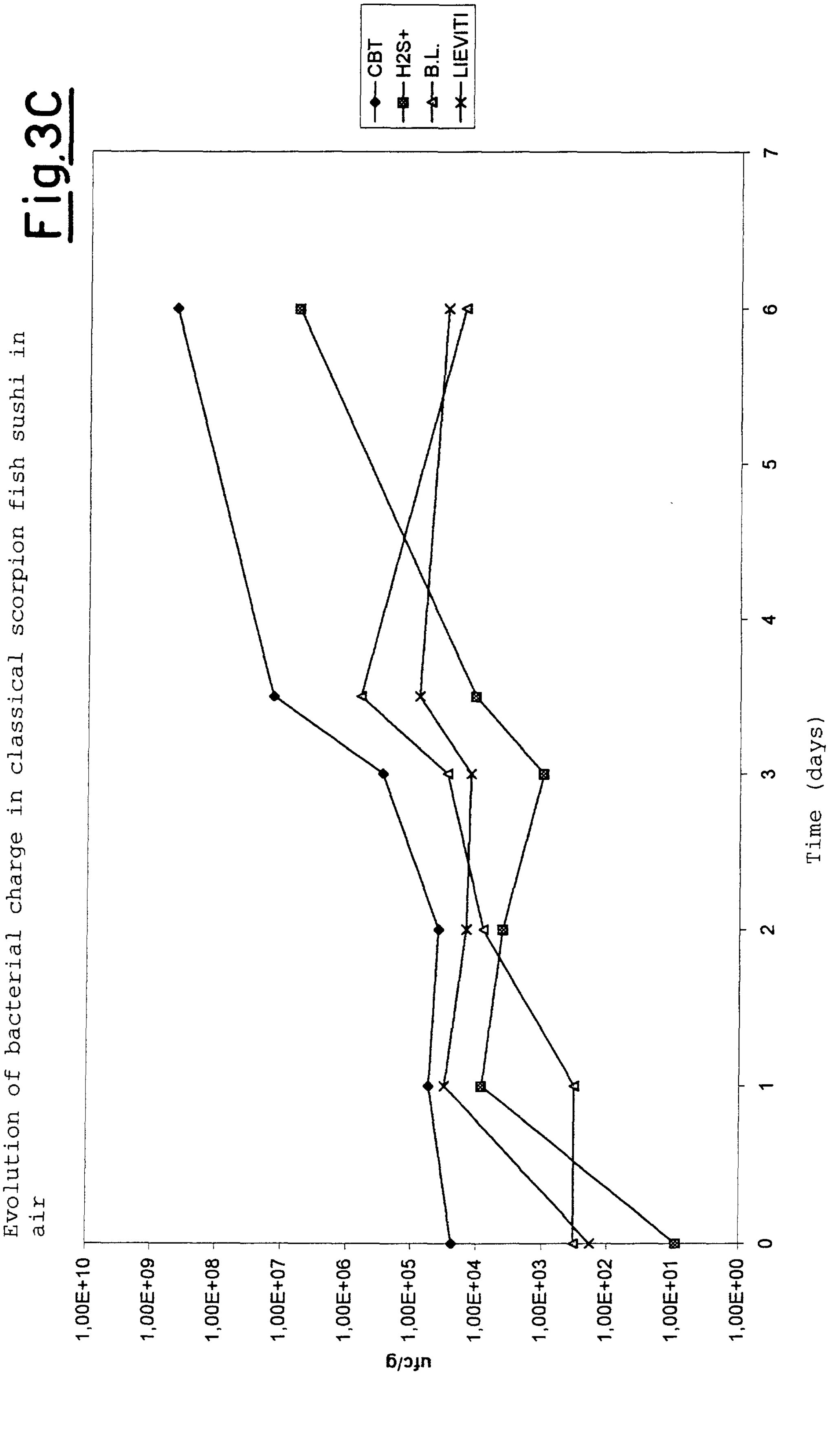

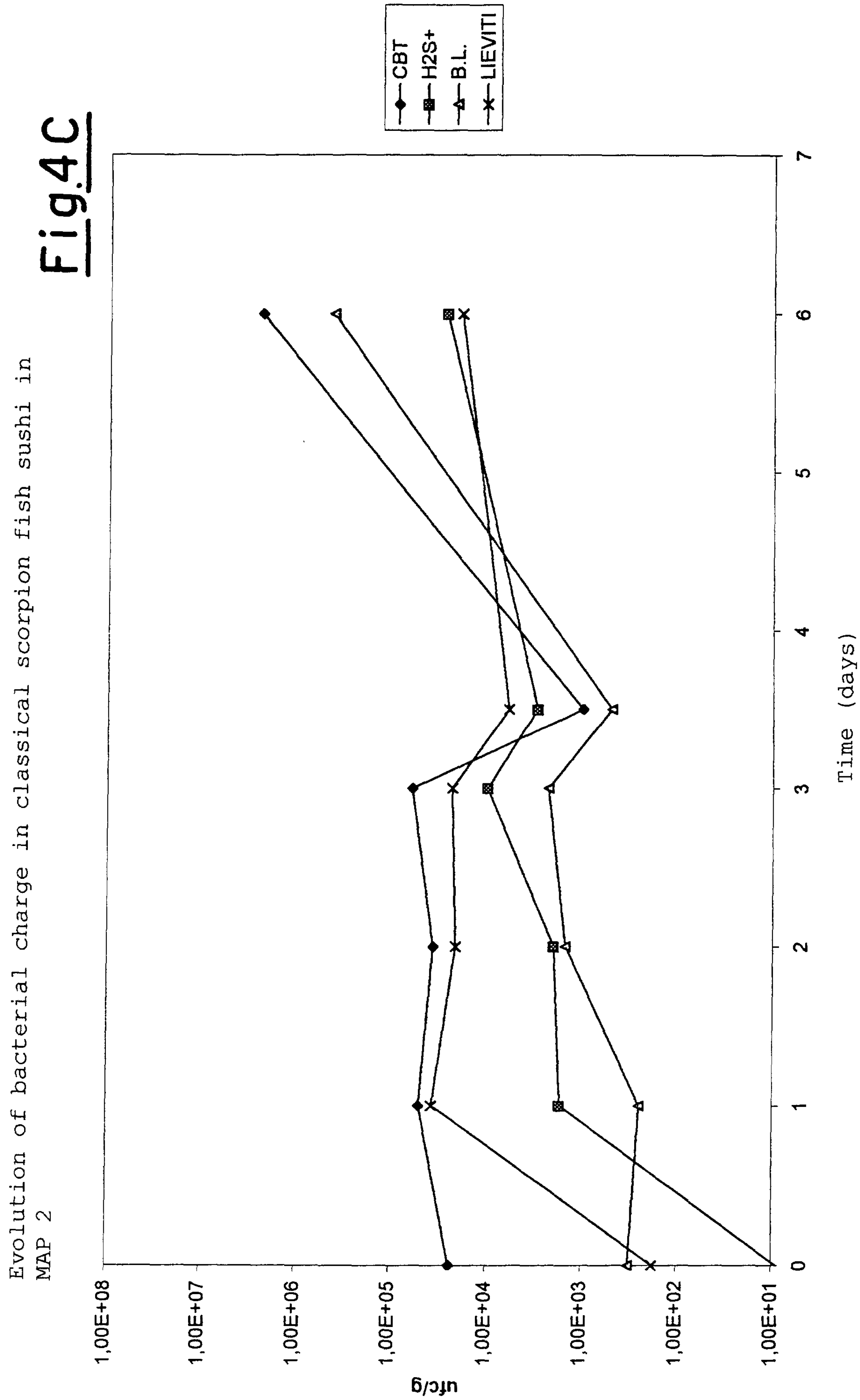
Evolution of bacterial charge in classical scorpion fish sushi in MAP 2
ufc/g
1,00E+08
1,00E+07
1,00E+06
1,00E+05
1,00E+04
1,00E+03
1,00E+02
1,00E+01
0
1
2
3
4
5
6
7
Time (days)
CBT
H2S+
B.L.
LIEVITI

Fig.4C

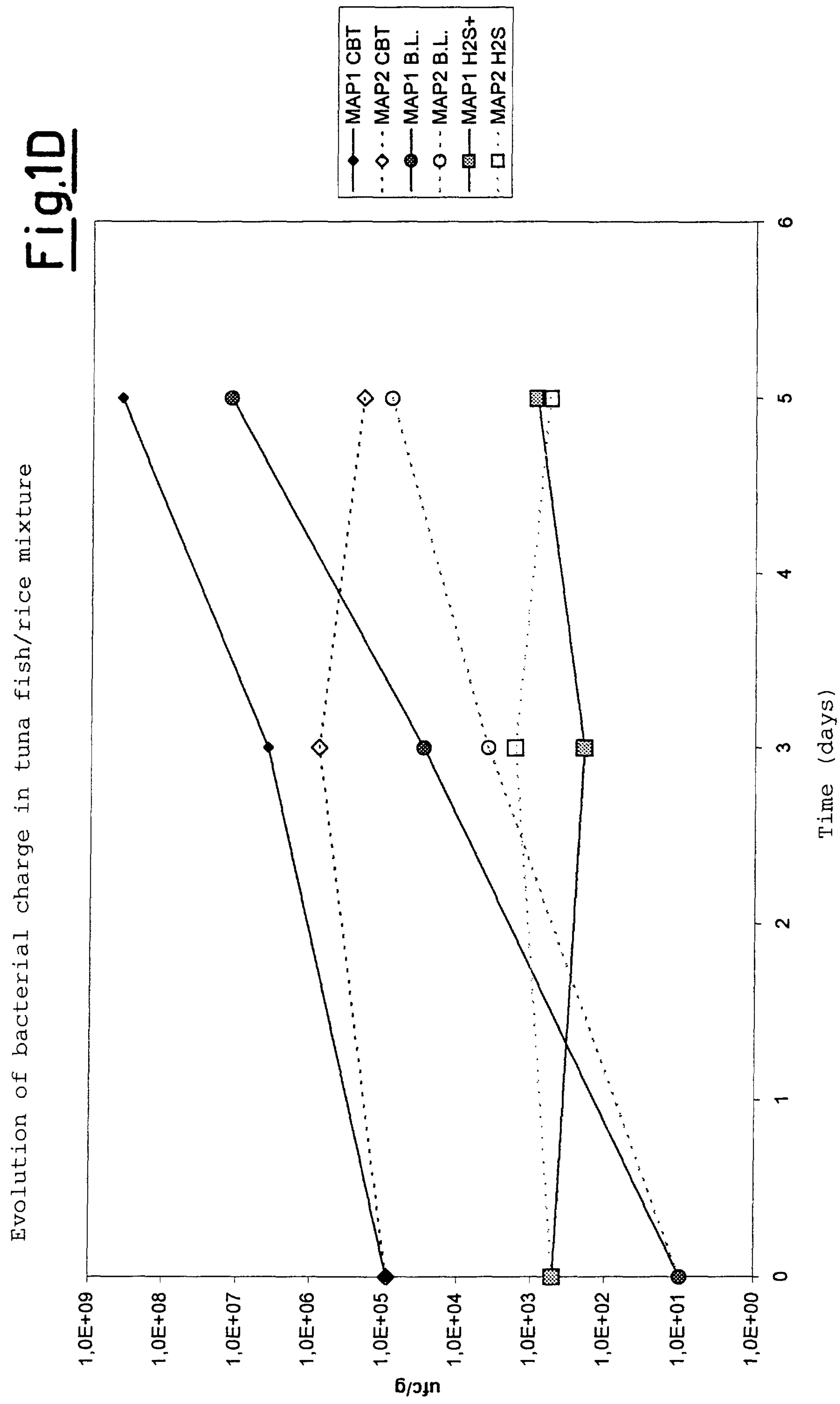
Evolution of bacterial charge in tuna fish/rice mixture
ufc/g
1,0E+09
1,0E+08
1,0E+07
1,0E+06
1,0E+05
1,0E+04
1,0E+03
1,0E+02
1,0E+01
1,0E+00
0
1
2
3
4
5
6
Time (days)
MAP1 CBT
MAP2 CBT
MAP1 B.L.
MAP2 B.L.
MAP1 H2S+
MAP2 H2S

Fig.1D

Fig.2D

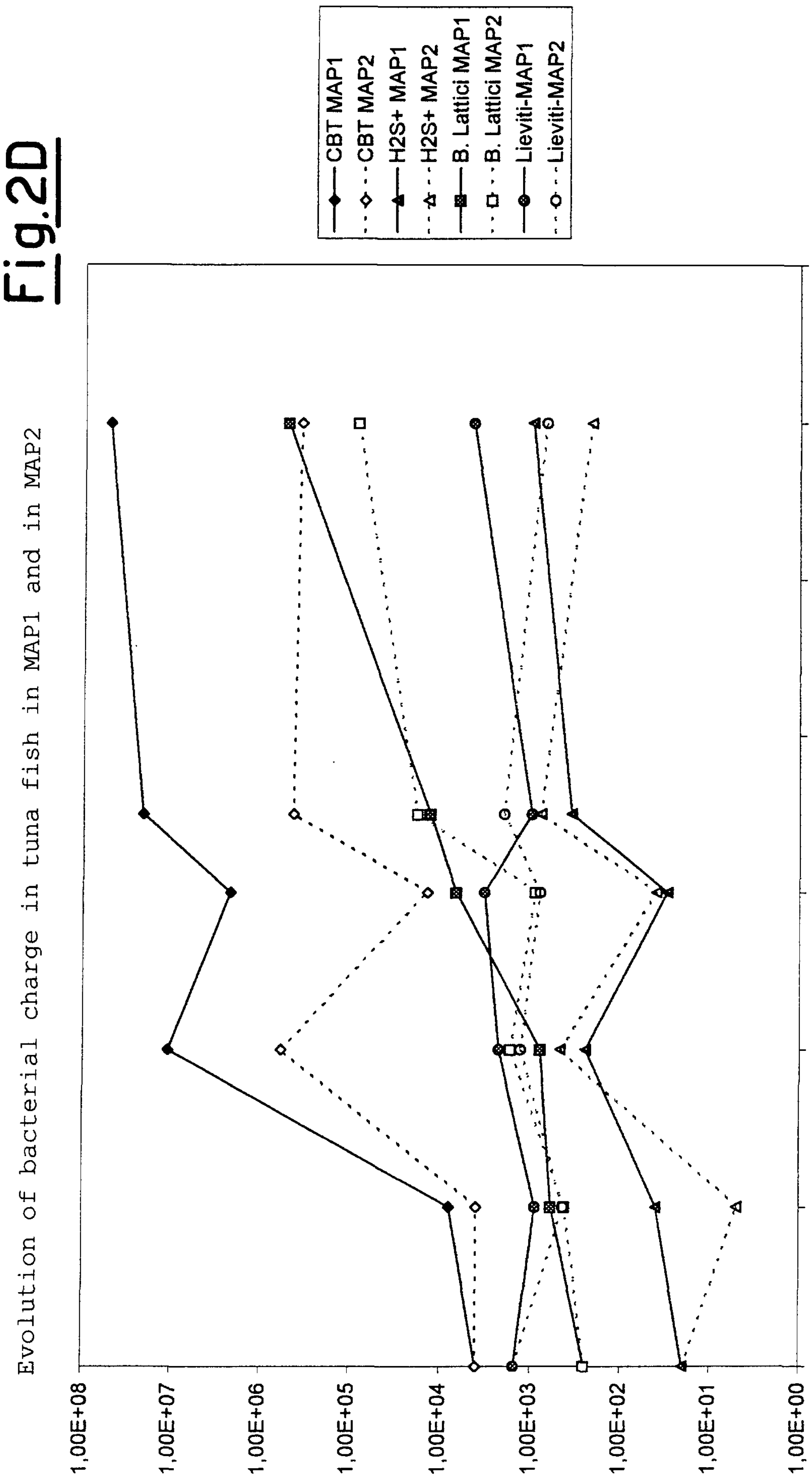
Evolution of bacterial charge in tuna fish in MAP1 and in MAP2
ufc/g
1,00E+08
1,00E+07
1,00E+06
1,00E+05
1,00E+04
1,00E+03
1,00E+02
1,00E+01
1,00E+00
0
1
2
3
4
5
6
7
Time (days)
CBT MAP1
CBT MAP2
H2S+ MAP1
H2S+ MAP2
B. Lattici MAP1
B. Lattici MAP2
Lieviti-MAP1
Lieviti-MAP2

Fig.3D

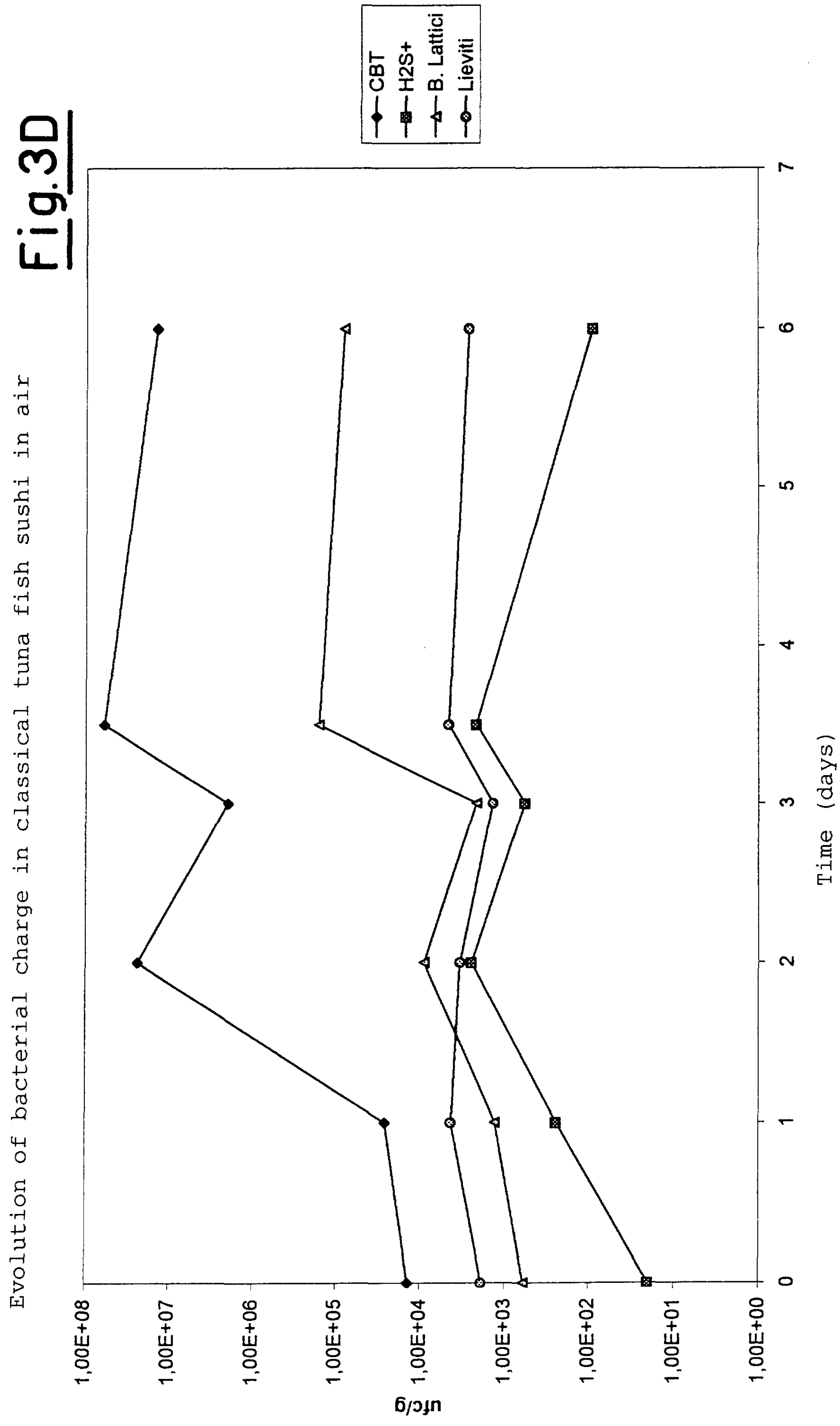
Evolution of bacterial charge in classical tuna fish sushi in air
ufc/g
1,00E+08
1,00E+07
1,00E+06
1,00E+05
1,00E+04
1,00E+03
1,00E+02
1,00E+01
1,00E+00
0
1
2
3
4
5
6
7
Time (days)
CBT
H2S+
B. Lattici
Lieviti

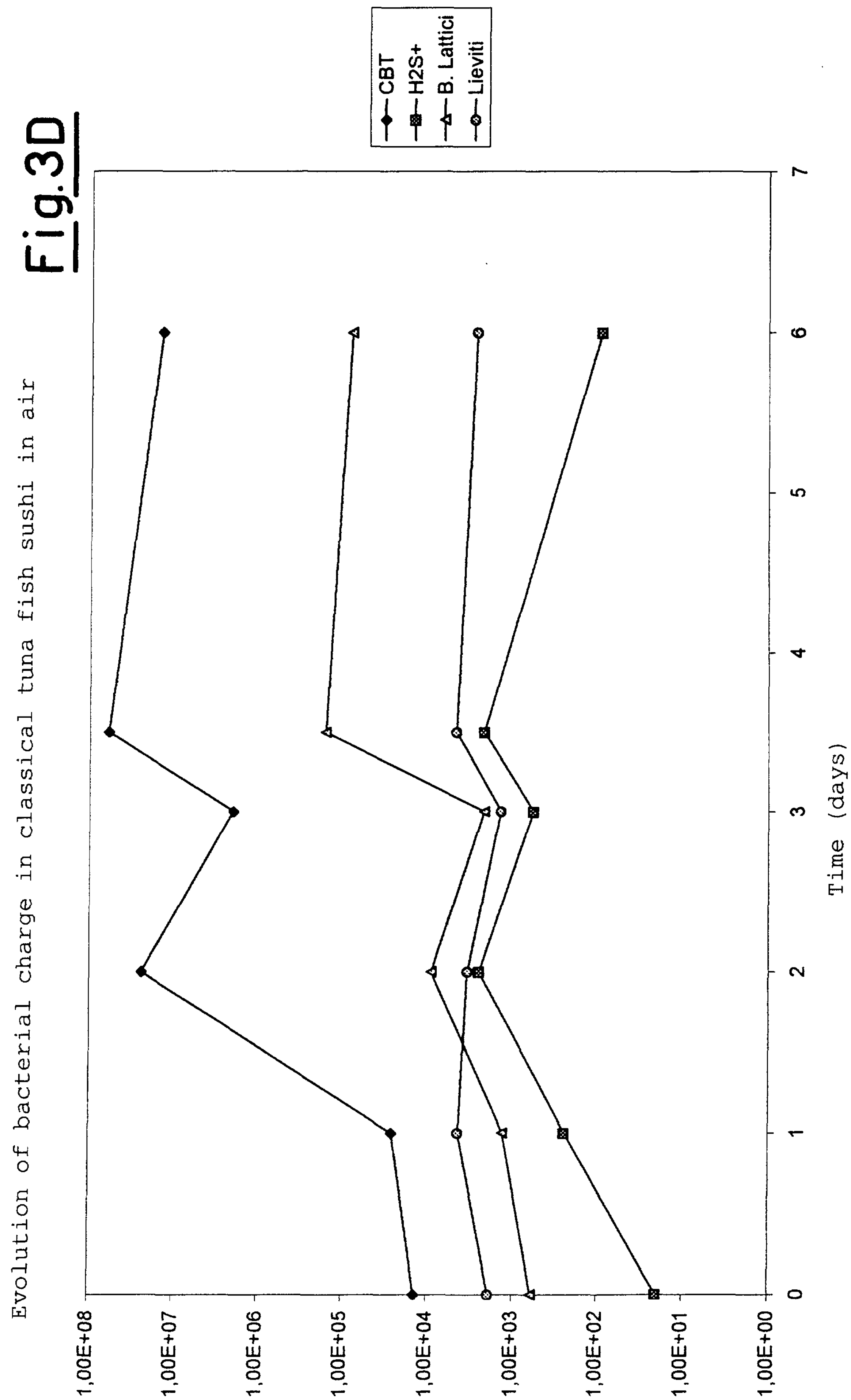
Evolution of bacterial charge in classical tuna fish sushi in air
ufc/g
1,00E+08
1,00E+07
1,00E+06
1,00E+05
1,00E+04
1,00E+03
1,00E+02
1,00E+01
1,00E+00
0
1
2
3
4
5
6
7
Time (days)
CBT
H2S+
B. Lattici
Lieviti

Fig.3D

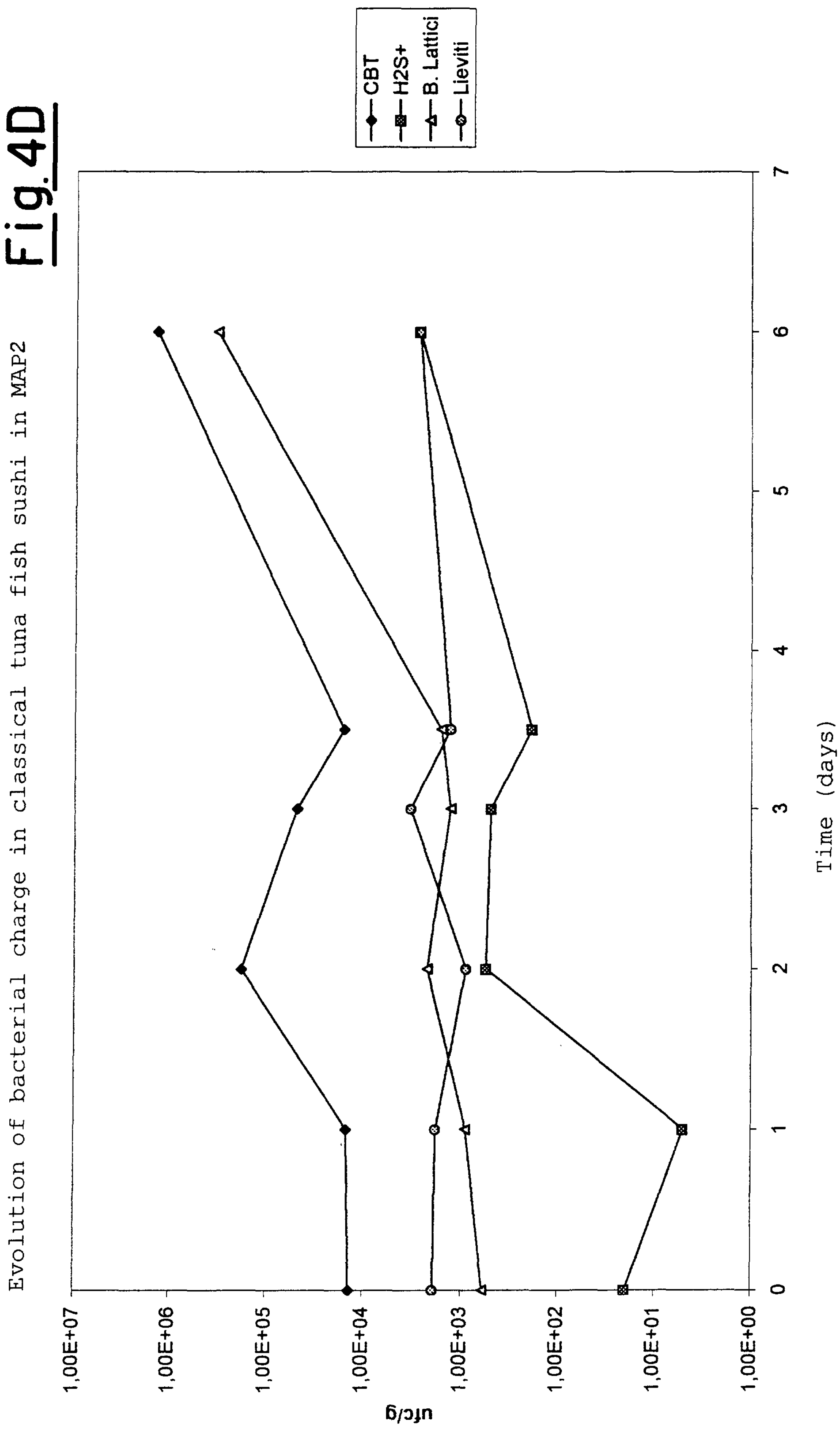
Evolution of bacterial charge in classical tuna fish sushi in MAP2
ufc/g
1,00E+07
1,00E+06
1,00E+05
1,00E+04
1,00E+03
1,00E+02
1,00E+01
1,00E+00
0
1
2
3
4
5
6
7
Time (days)
CBT
H2S+
B. Lattici
Lieviti

Fig. 4D

Fig.1E

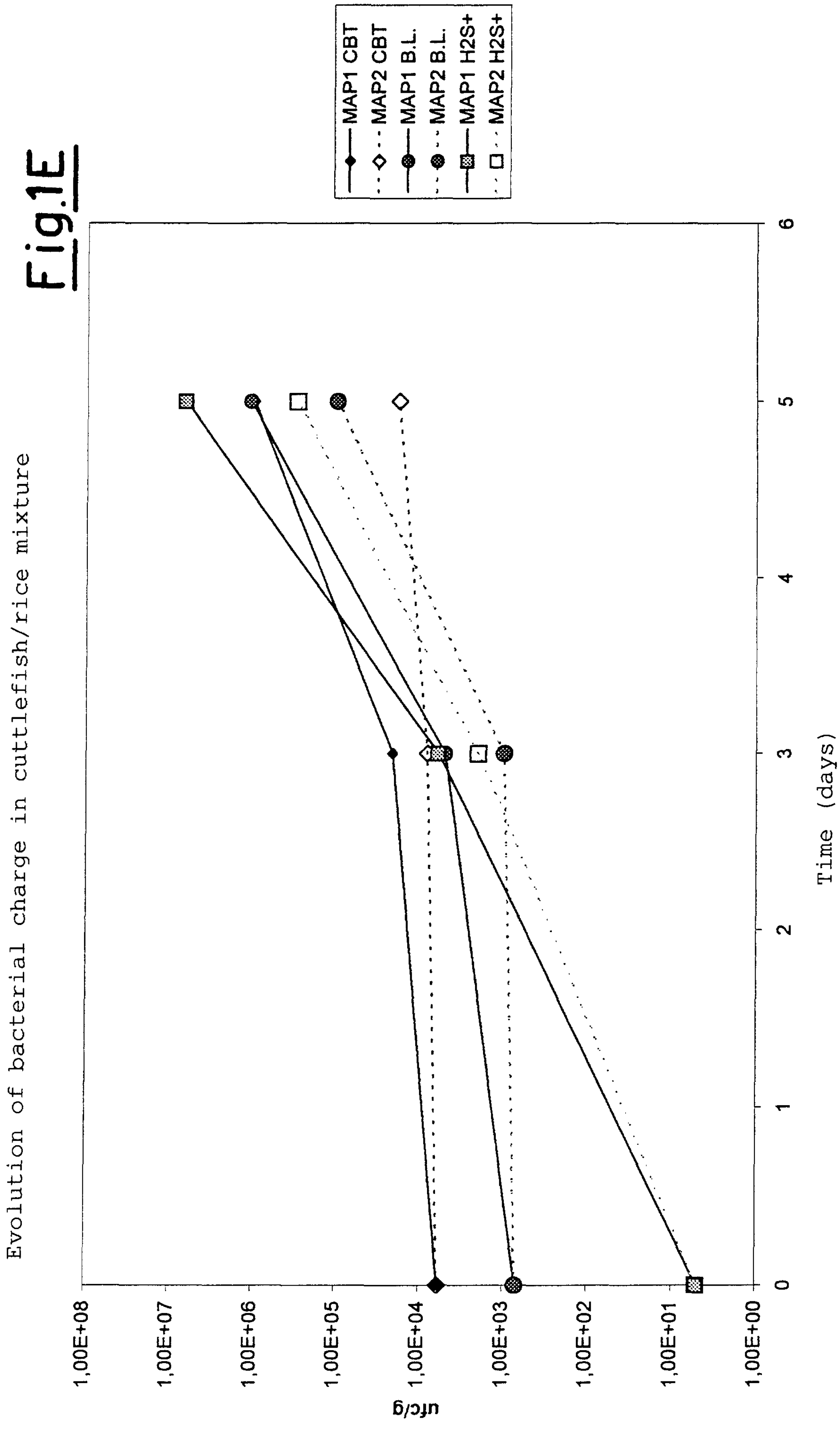
Evolution of bacterial charge in cuttlefish/rice mixture
ufc/g
1,00E+08
1,00E+07
1,00E+06
1,00E+05
1,00E+04
1,00E+03
1,00E+02
1,00E+01
1,00E+00
0
1
2
3
4
5
6
Time (days)
MAP1 CBT
MAP2 CBT
MAP1 B.L.
MAP2 B.L.
MAP1 H2S+
MAP2 H2S+

Fig.2E

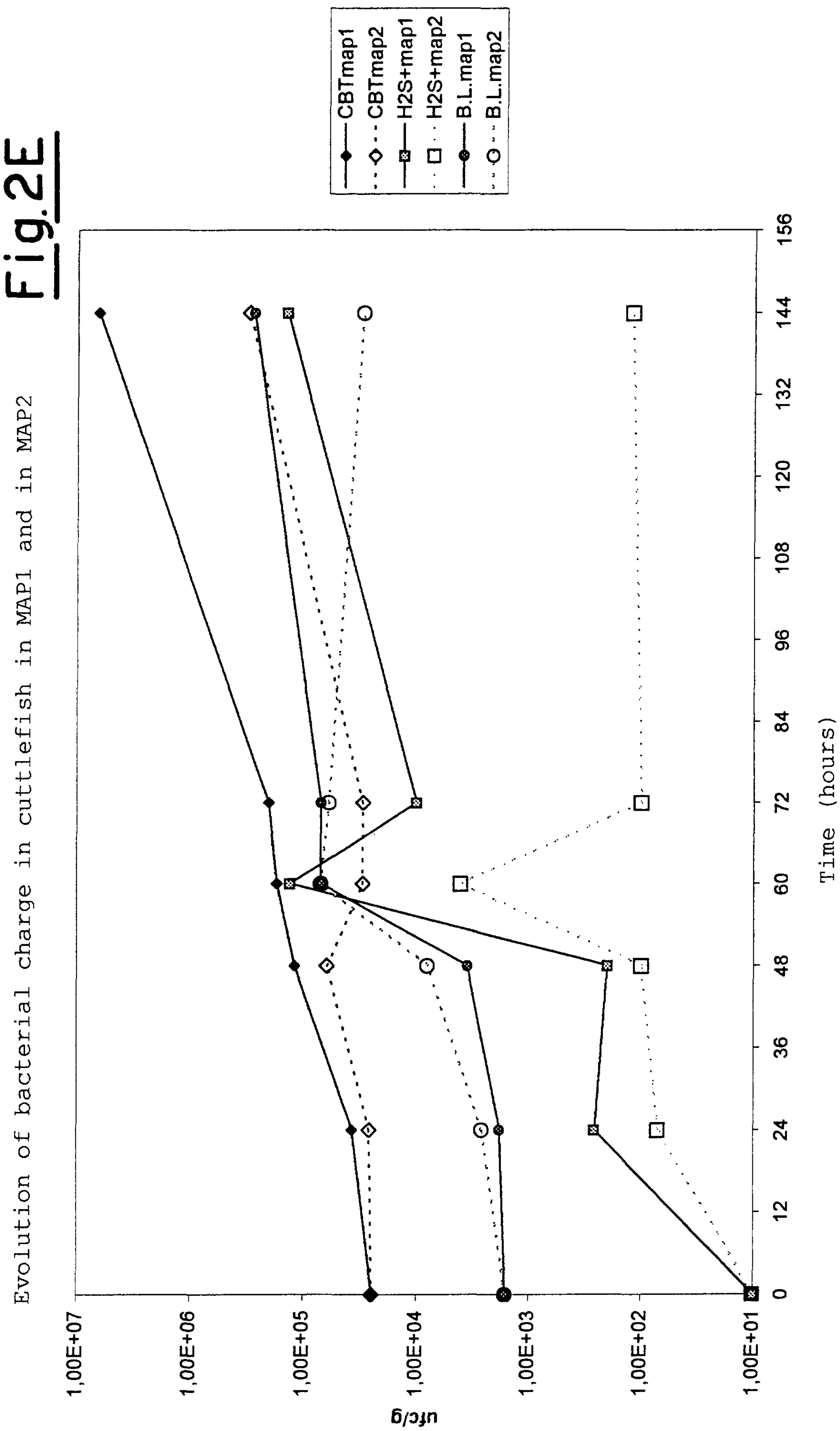
Evolution of bacterial charge in cuttlefish in MAP1 and in MAP2
ufc/g
1,00E+07
1,00E+06
1,00E+05
1,00E+04
1,00E+03
1,00E+02
1,00E+01
0
12
24
36
48
60
72
84
96
108
120
132
144
156
Time (hours)
CBTmap1
CBTmap2
H2S+map1
H2S+map2
B.L.map1
B.L.map2

Fig.3E

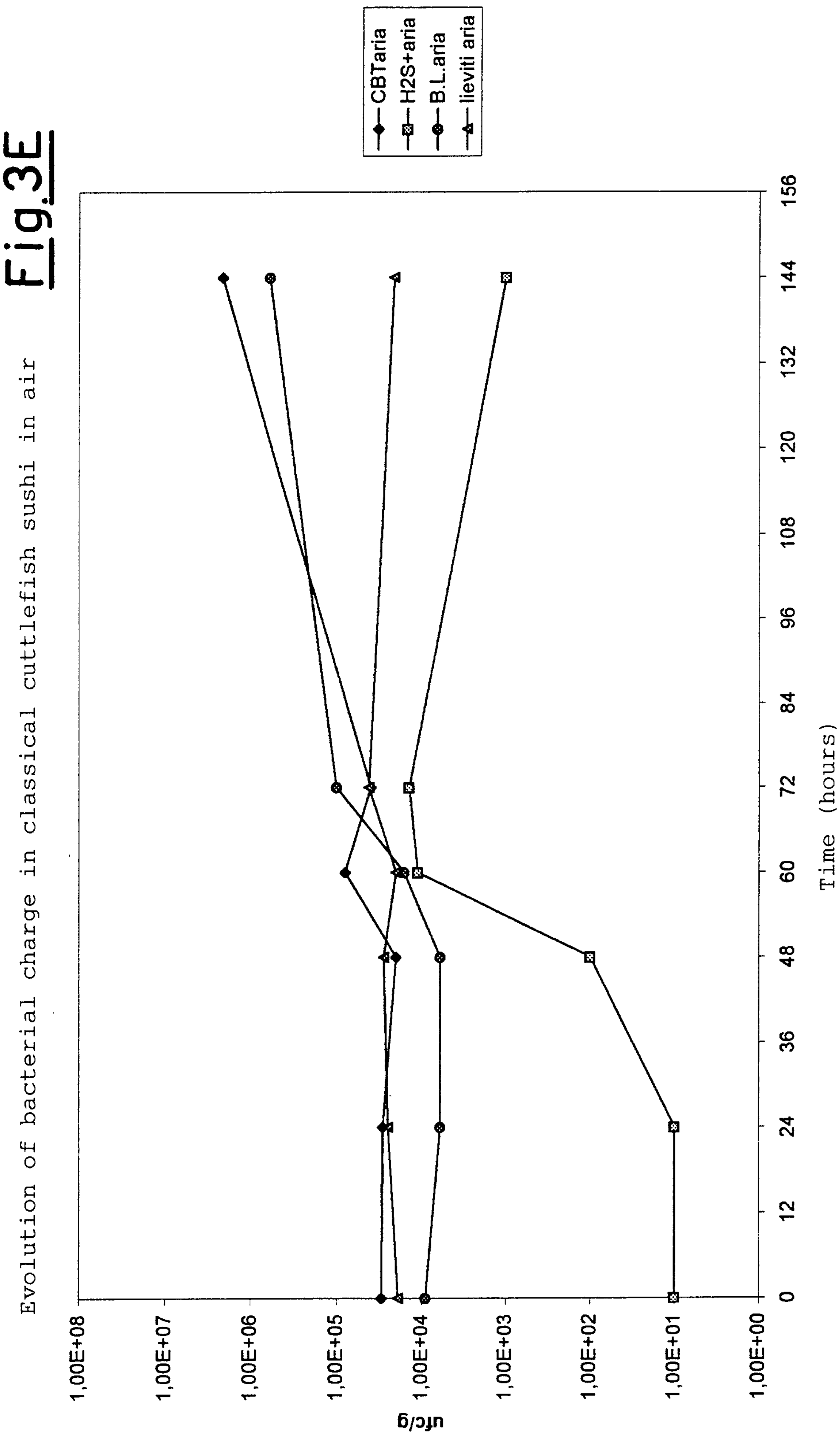
Evolution of bacterial charge in classical cuttlefish sushi in air
ufc/g
1,00E+08
1,00E+07
1,00E+06
1,00E+05
1,00E+04
1,00E+03
1,00E+02
1,00E+01
1,00E+00
0
12
24
36
48
60
72
84
96
108
120
132
144
156
Time (hours)
CBTaria
H2S+aria
B.L.aria
lieviti aria

Fig.4E

Evolution of bacterial charge in classical cuttlefish sushi in MAP2

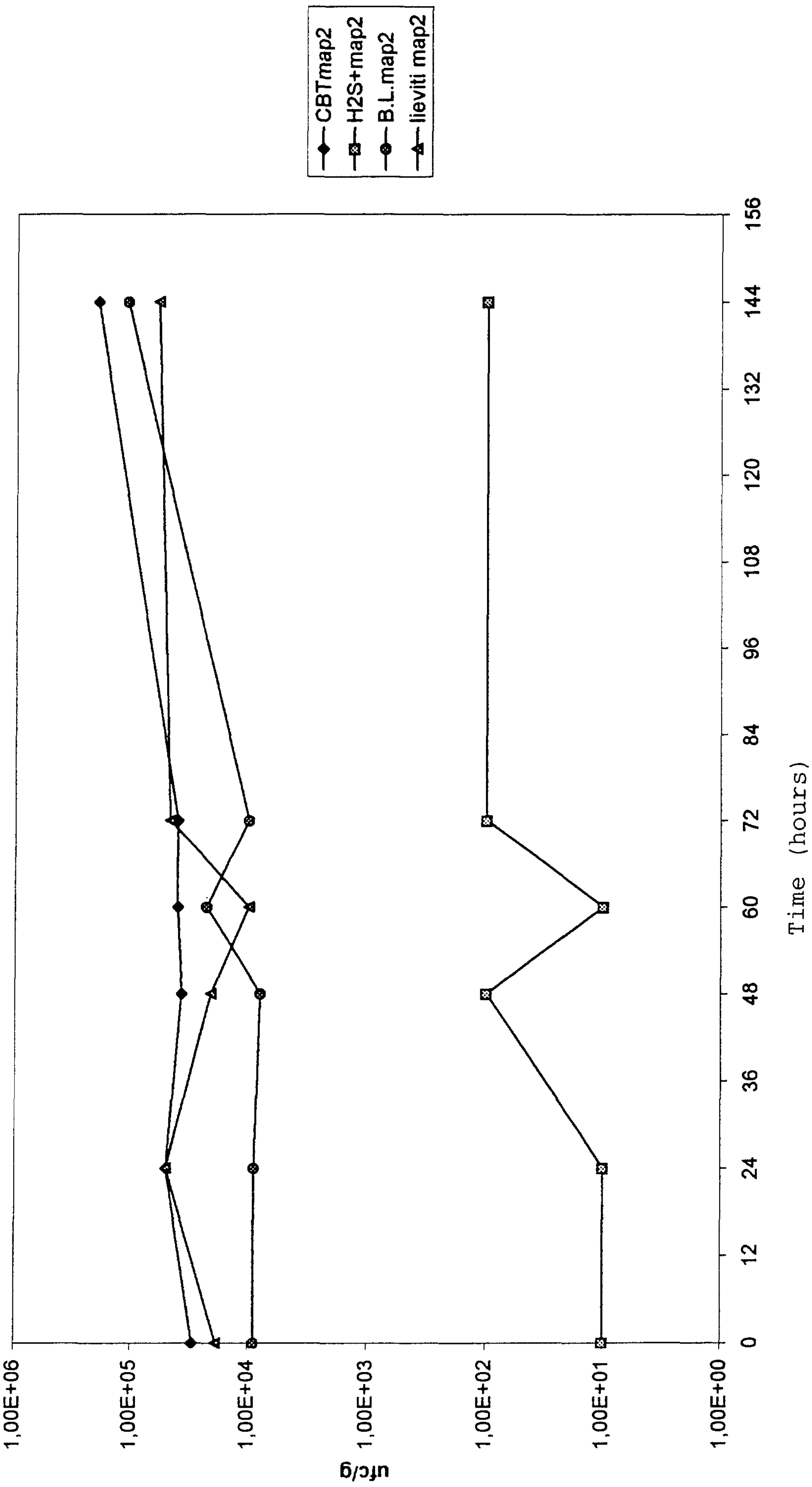

Fig.1F

Evolution of bacterial charge in prawns/rice mixture

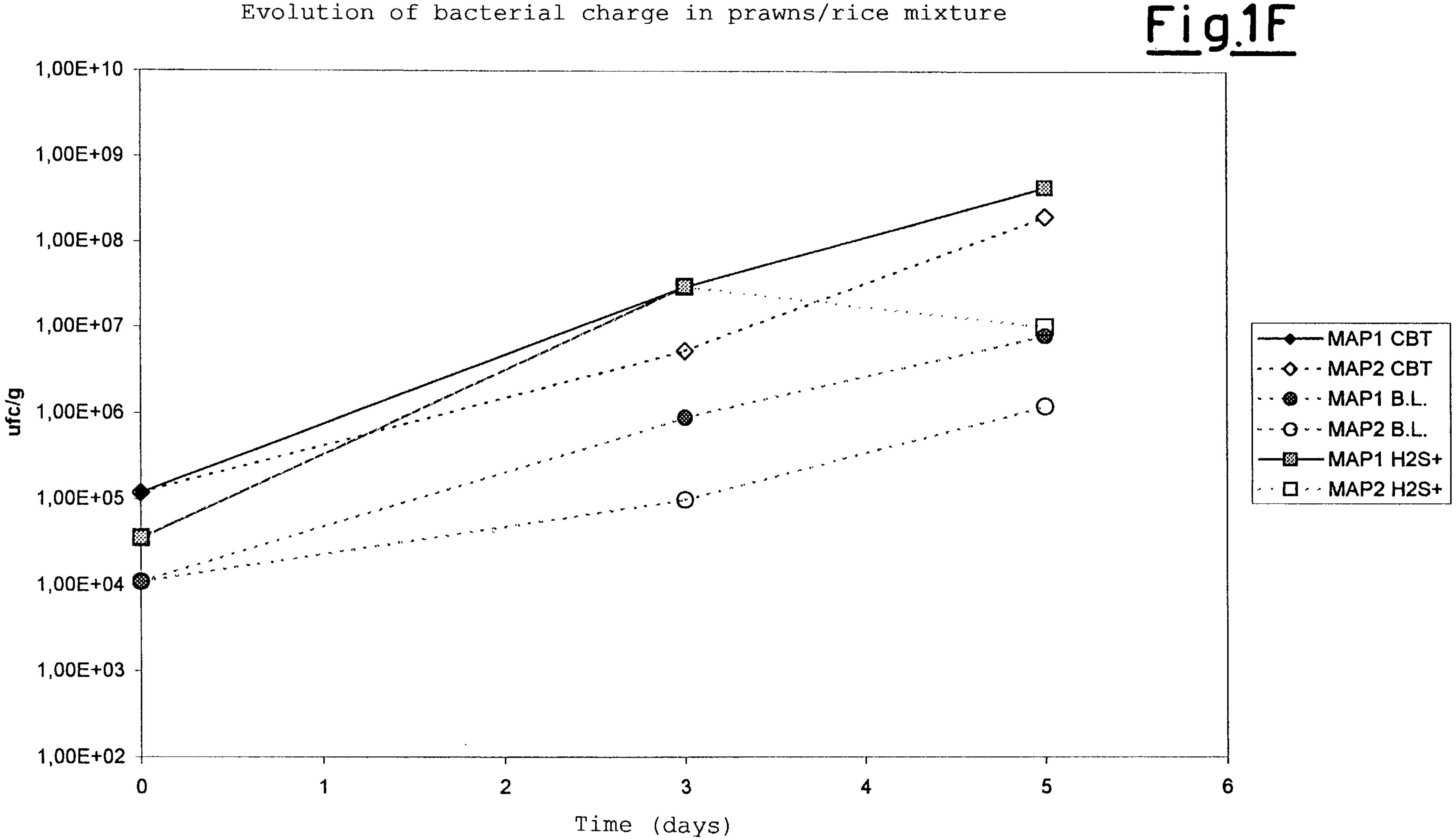

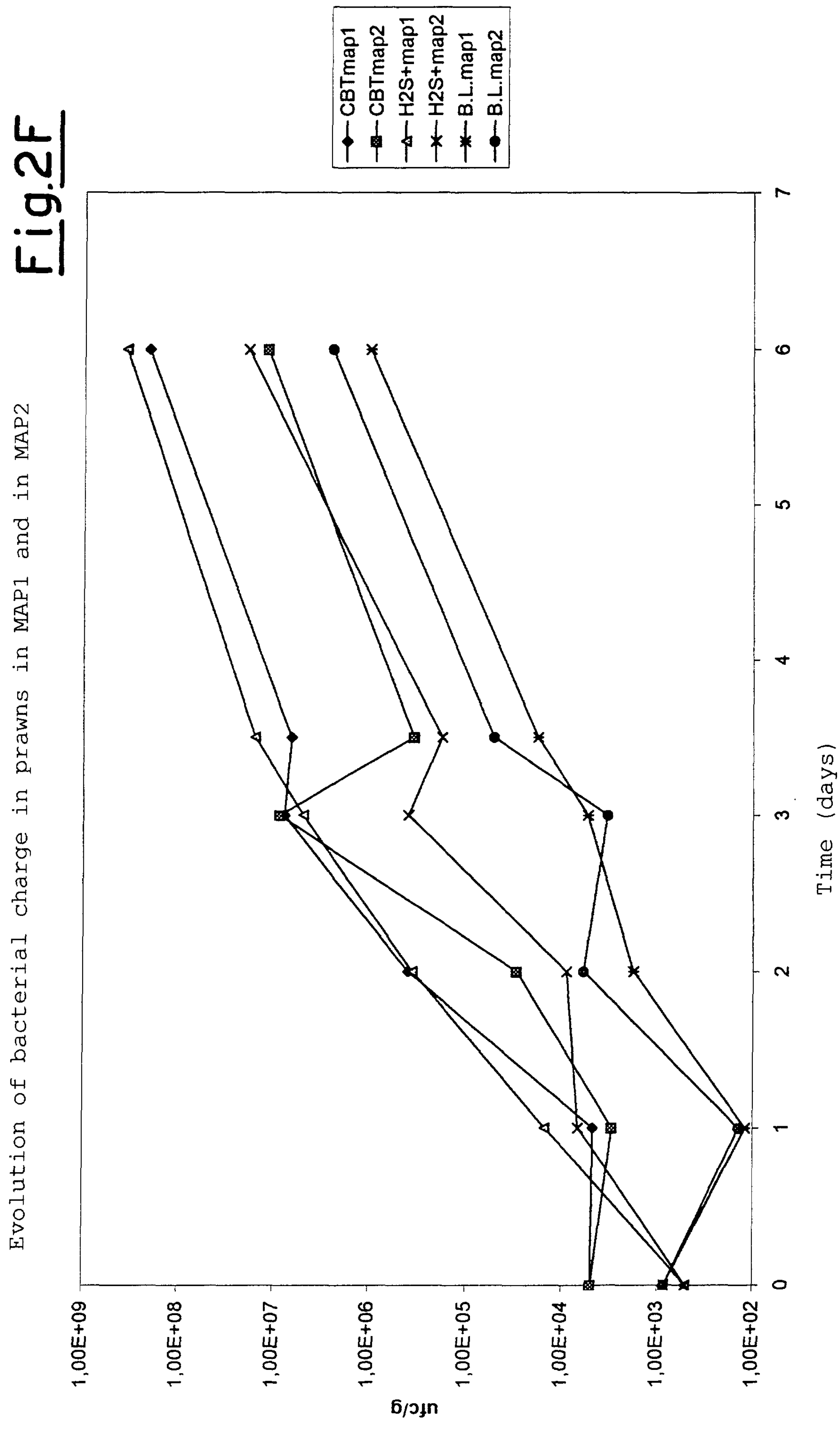
Evolution of bacterial charge in prawns in MAP1 and in MAP2
ufc/g
1,00E+09
1,00E+08
1,00E+07
1,00E+06
1,00E+05
1,00E+04
1,00E+03
1,00E+02
0
1
2
3
4
5
6
7
Time (days)
CBTmap1
CBTmap2
H2S+map1
H2S+map2
B.L.map1
B.L.map2

Fig.2F

Fig.3F

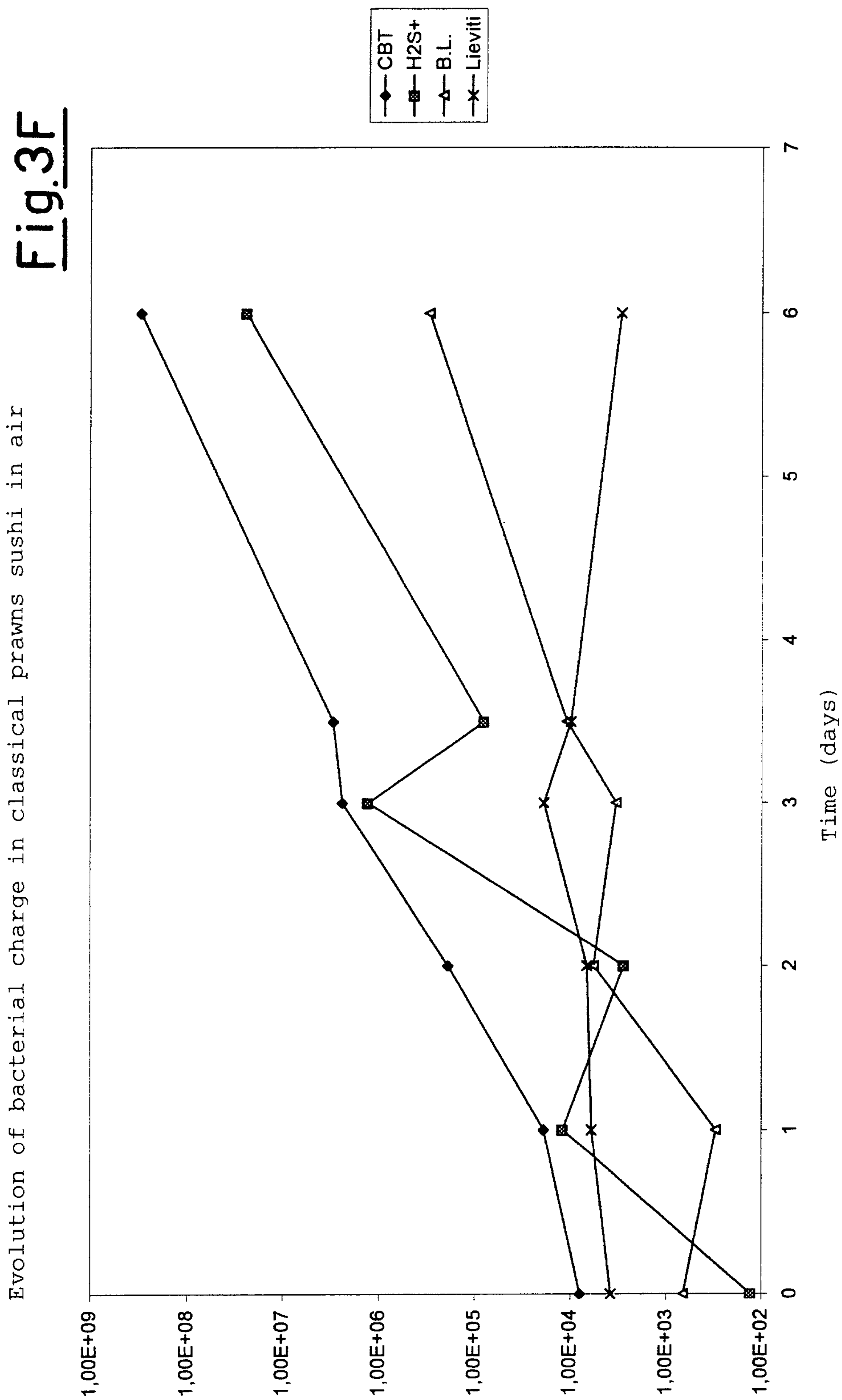
Evolution of bacterial charge in classical prawns sushi in air
ufc/g
1,00E+09
1,00E+08
1,00E+07
1,00E+06
1,00E+05
1,00E+04
1,00E+03
1,00E+02
0
1
2
3
4
5
6
7
Time (days)
CBT
H2S+
B.L.
Lieviti

Fig.4F

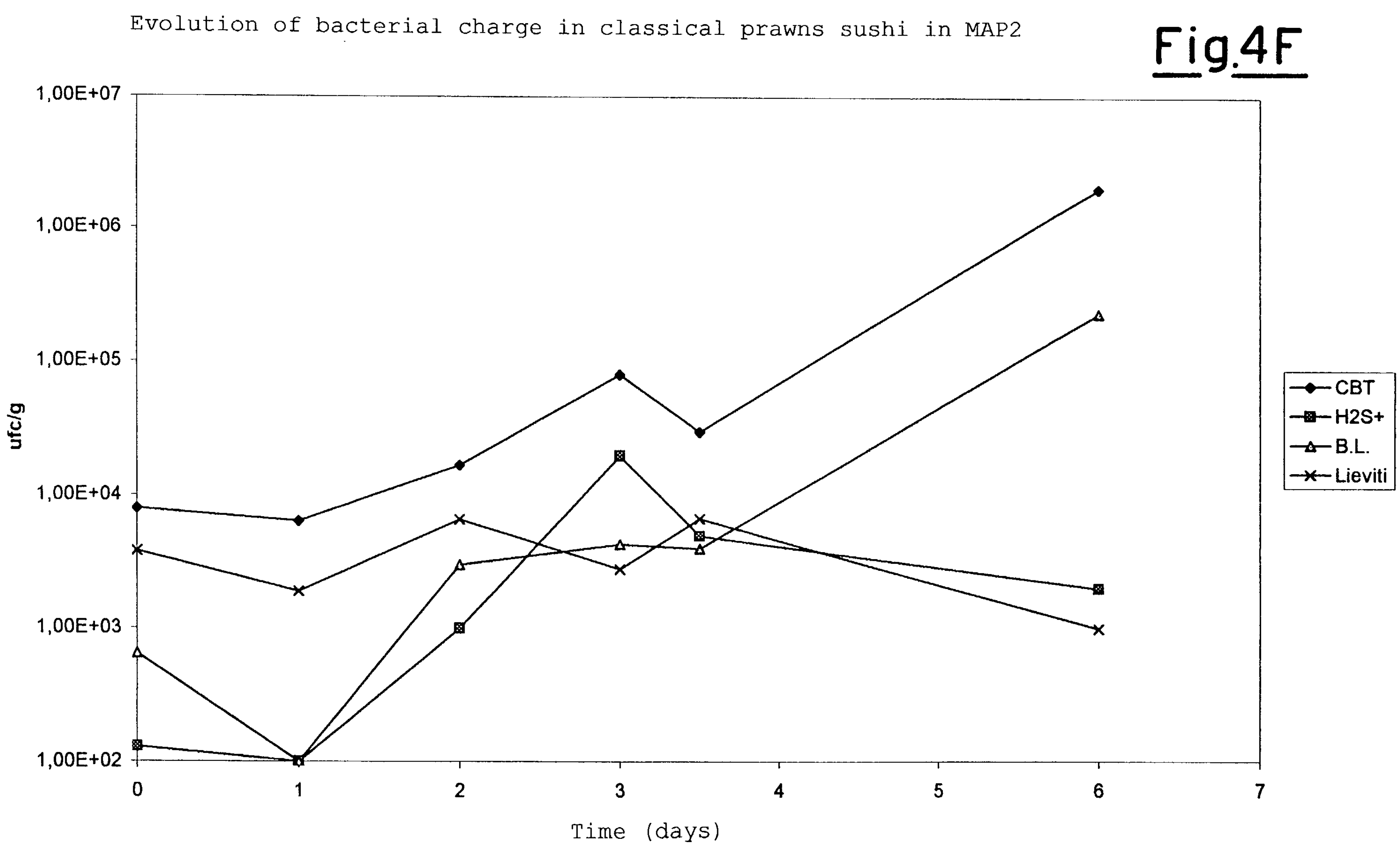
Evolution of bacterial charge in classical prawns sushi in MAP2
1,00E+07
1,00E+06
1,00E+05
1,00E+04
1,00E+03
1,00E+02
ufc/g
0
1
2
3
4
5
6
7
Time (days)
CBT
H2S+
B.L.
Lieviti